# EUROPEAN PATENT APPLICATION

(11) **EP 4 287 734 A1**
(43) Date of publication of application: **06.12.2023**
(21) Application number: 21923187.5
(22) Date of filing: 14.12.2021
(51) Int. Cl.: H04W 72/04, H04W 28/04

(54) **TERMINAL, COMMUNICATION METHOD, AND RADIO COMMUNICATION SYSTEM**

(30) Priority: 29.01.2021 JP 2021014026
(71) Applicant: NTT DOCOMO, INC., Tokyo 100-6150 (JP)
(72) Inventor: KUMAGAI, Shinya, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/046156
(87) International publication number: WO 2022/163183

(57) **Abstract**

A terminal includes a receiving unit that receives control information for changing a cell for transmitting uplink control information in a cell group; a control unit that switches, based on the control information, a specific cell for transmitting the uplink control information in the cell group to another cell; and a transmitting unit that transmits the uplink control information in the another cell.

## Description

### [Technical Field]

The present invention relates to a terminal and a base station in a radio communication system.

### [Background Art]

In the 3rd Generation Partnership Project (3GPP), a study on a radio communication system referred to as 5G or New Radio (NR) (in the following, the radio communication system is referred to as "NR") has been advanced, in order to achieve a further increase in system capacity, a further increase in a data transmission rate, a further reduction of latency in a radio section, and the like. In 5G, in order to meet the requirements that, while achieving a throughput of greater than or equal to 10 Gbps, latency in the radio section is reduced to be less than or equal to 1 ms, various radio technologies and various types of network architecture have been studied.

The "PUCCH carrier switching" has been studied for the extension of the Ultra-Reliable and Low Latency Communications (URLLC) technology in the 3GPP Release 17. The "PUCCH carrier switching" has been studied as a method for reducing the latency of the Hybrid Automatic Repeat ReQuest-ACKnowledgement (HARQ-ACK) feedback in the Time Division Duplex (TDD) method (Non-Patent Document 1).

### [Citation List]

### [Non Patent Literature]

[NPL 1] 3GPP TSG RAN Meeting #88e, RP-201310, Electronic meeting, June 29-July 3, 2020

### [Summary of Invention]

### [Technical Problem]

In the 3GPP meeting, two methods for implementing the "PUCCH carrier switching" have been studied. The first method is a method in which a base station dynamically indicates a carrier for transmitting a PUCCH to a terminal. The second method is a method in which a base station semi-statically configures a carrier for performing a PUCCH transmission for a terminal.

In connection with the implementation of the "PUCCH carrier switching," there is a need for clarifying an operation of a terminal.

### [Solution to Problem]

According to the disclosed technology, there is provided a terminal including a receiving unit that receives control information for changing a cell for transmitting uplink control information in a cell group; a control unit that switches, based on the control information, a specific cell for transmitting the uplink control information in the cell group to another cell; and a transmitting unit that transmits the uplink control information in the another cell.

### [Advantageous Effects of Invention]

According to the disclosed technology, an operation of a terminal is clarified in a case of implementing the "PUCCH carrier switching."

### [Brief Description of Drawings]

[Fig. 1]

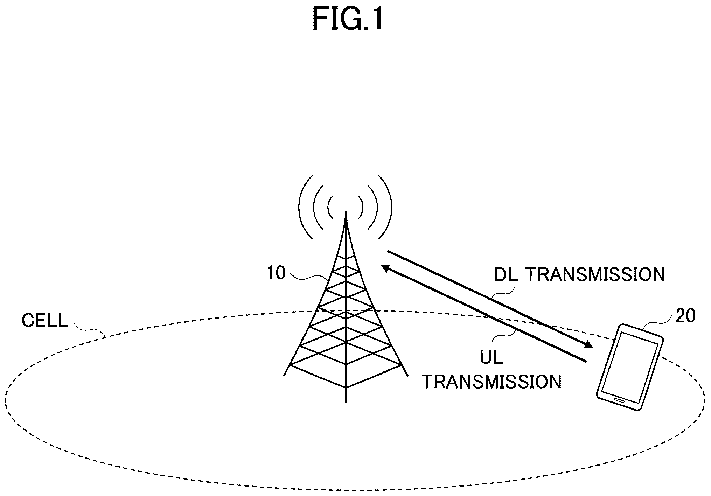

   Fig. 1 is a diagram for illustrating an example of a radio communication system according to an embodiment of the present invention.
[Fig. 2]

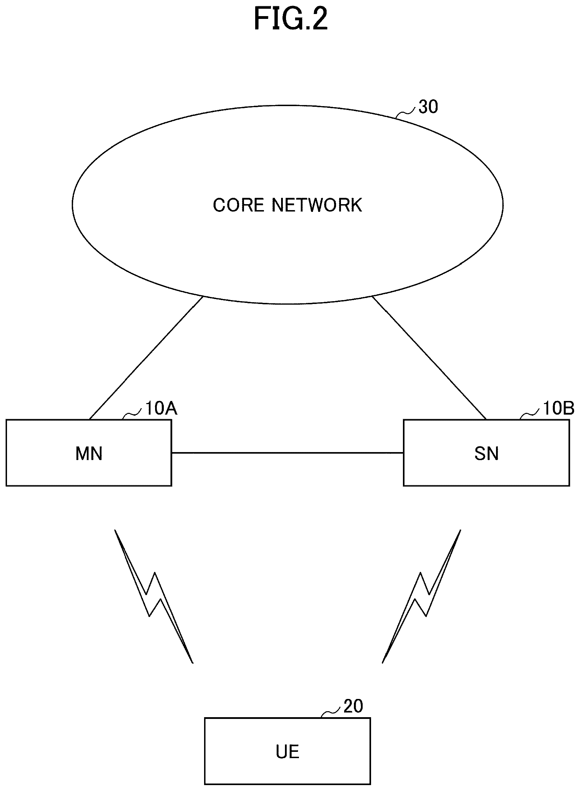

   Fig. 2 is a diagram for illustrating an example of a radio communication system according to an embodiment of the present invention.
[Fig. 3]

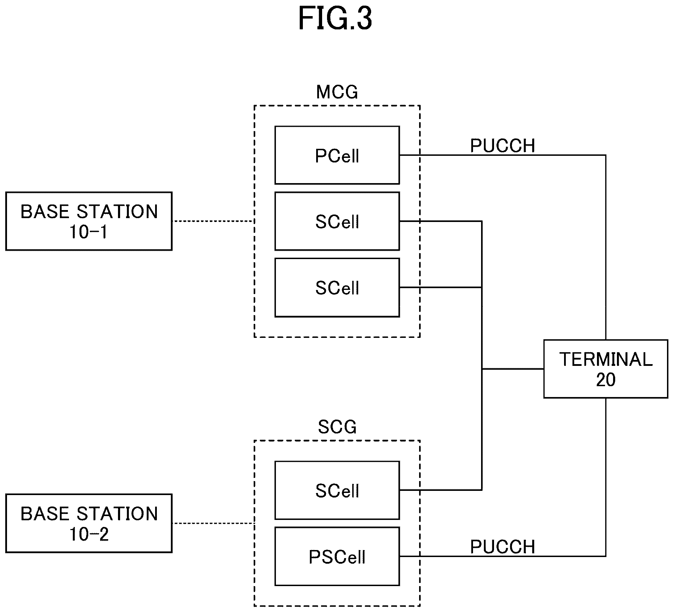

   Fig. 3 is a diagram for illustrating an example of dual connectivity
[Fig. 4]

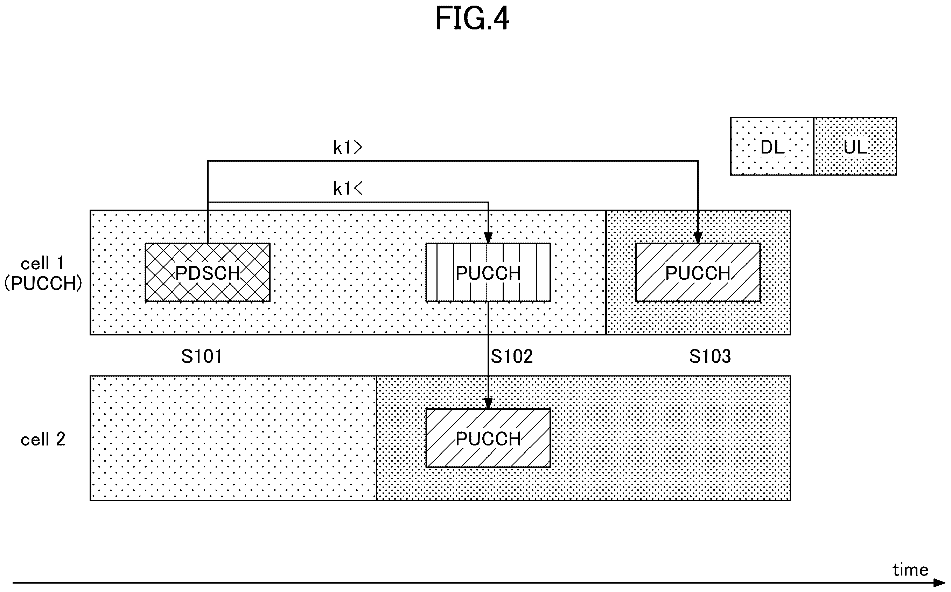

   Fig. 4 is a diagram illustrating an example of PUCCH carrier switching.
[Fig. 5]

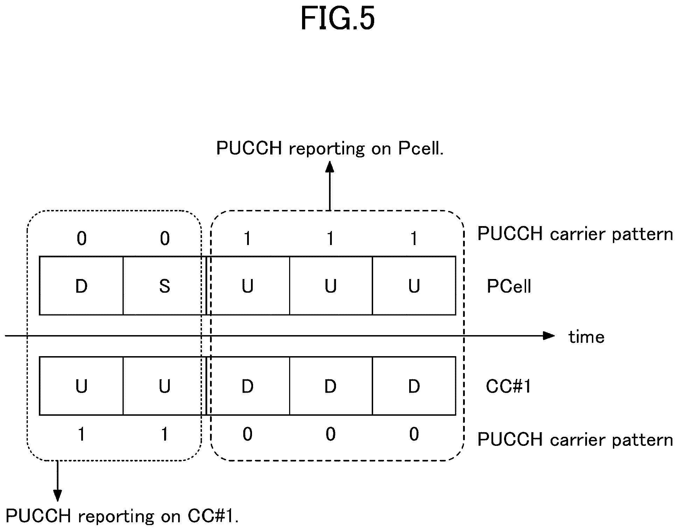

   Fig. 5 is a diagram illustrating an example of a timing pattern.
[Fig. 6]

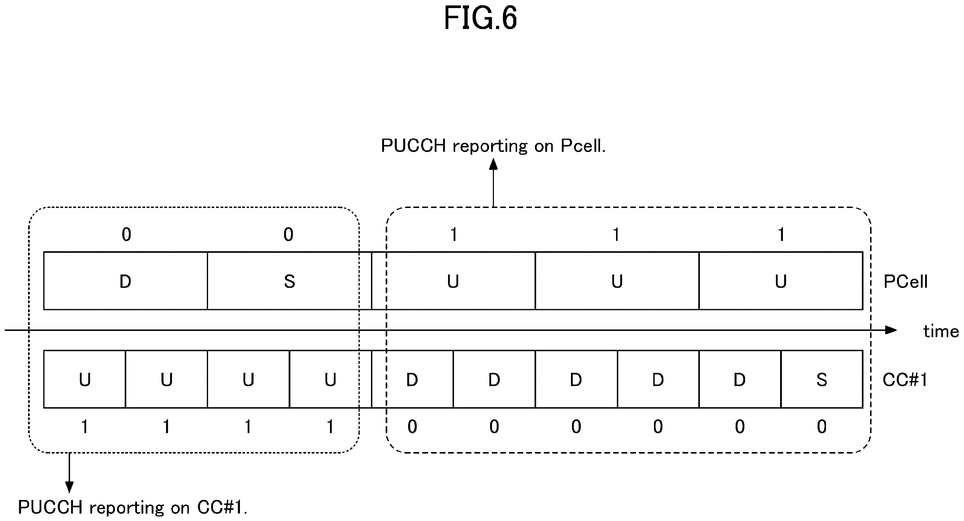

   Fig. 6 is a diagram illustrating an example of a timing pattern.
[Fig. 7]

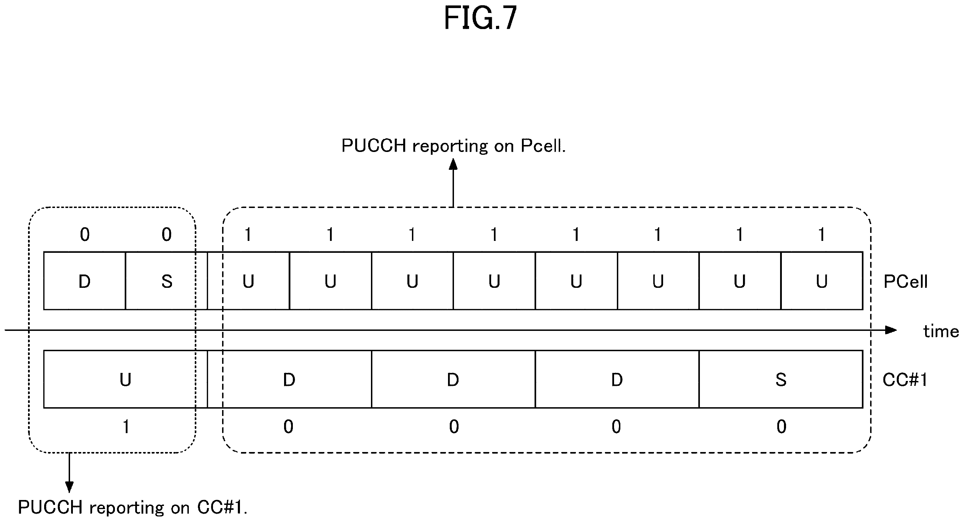

   Fig. 7 is a diagram illustrating an example of a timing pattern.
[Fig. 8]

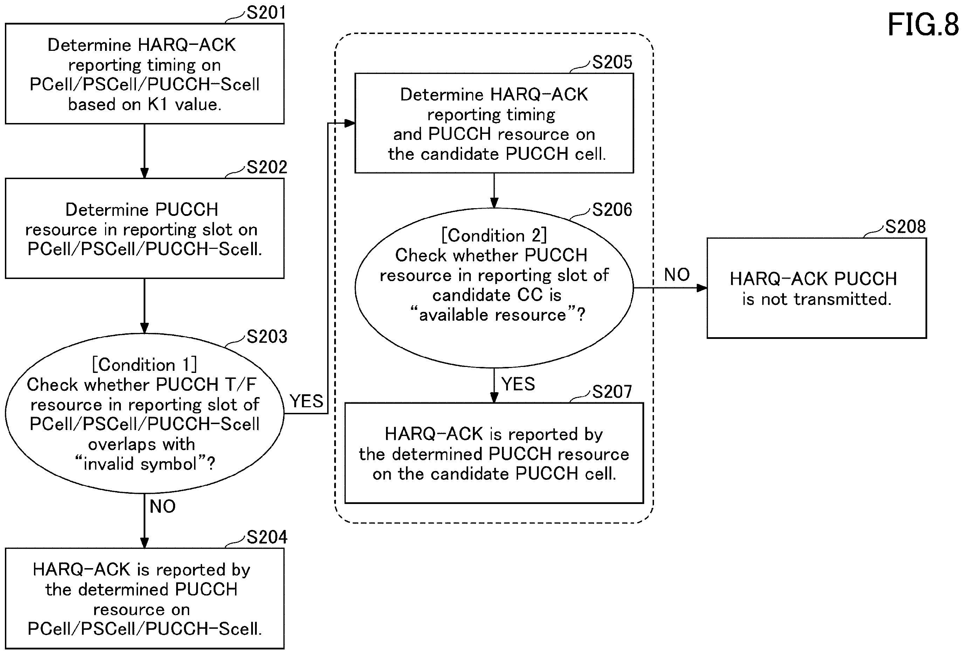

   Fig. 8 is a diagram illustrating an example of an operation of a terminal.
[Fig. 9]

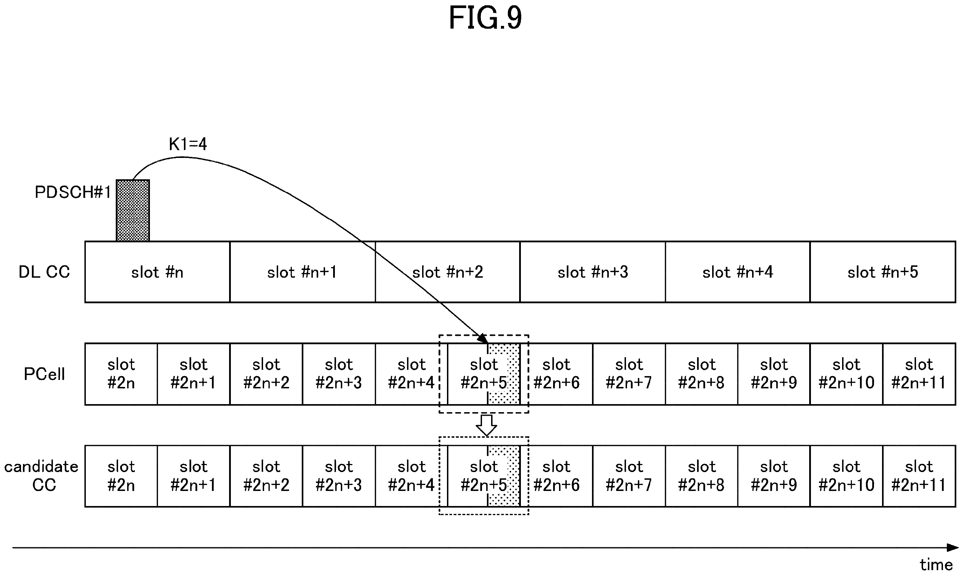

   Fig. 9 is a diagram illustrating an example of a case where subcarrier spacings are the same.
[Fig. 10]

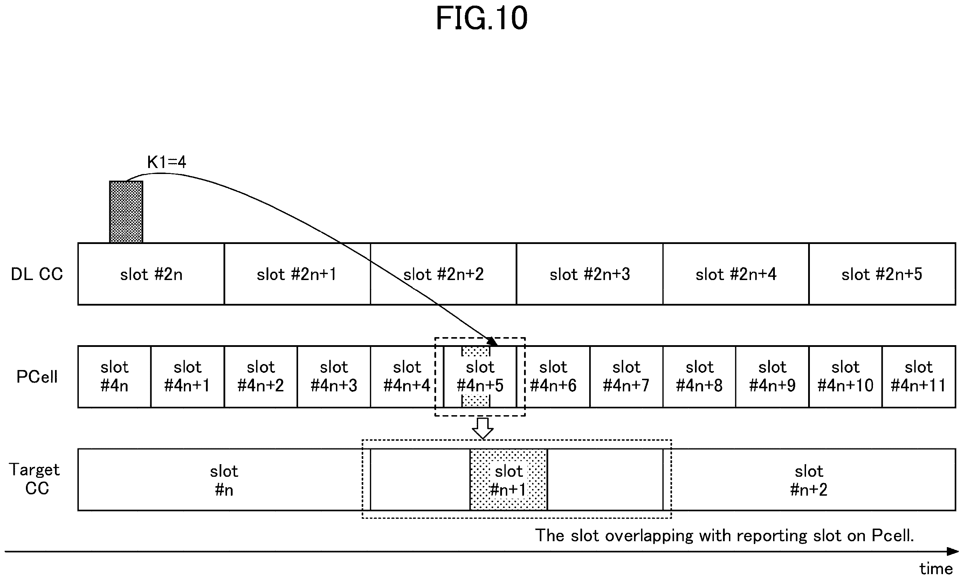

   Fig. 10 is a diagram illustrating an example of a case where subcarrier spacings are different.
[Fig. 11]

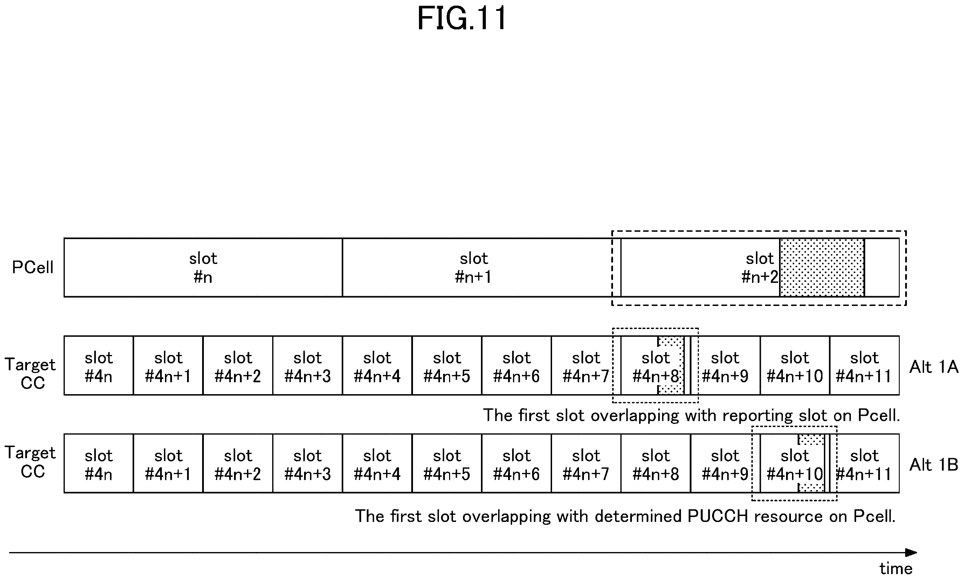

   Fig. 11 is a diagram illustrating an example of a case where subcarrier spacings are different.
[Fig. 12]

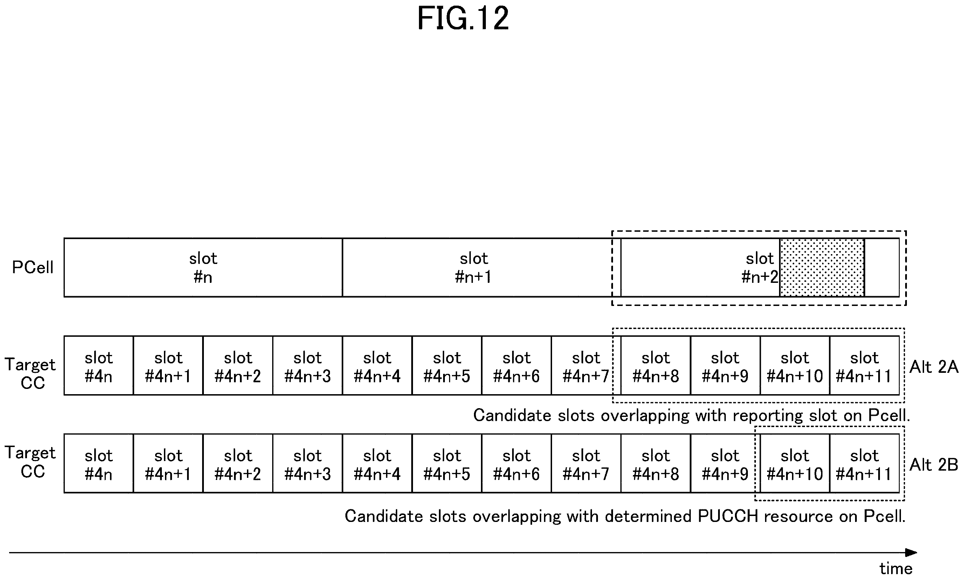

   Fig. 12 is a diagram illustrating an example of a case where subcarrier spacings are different.
[Fig. 13]

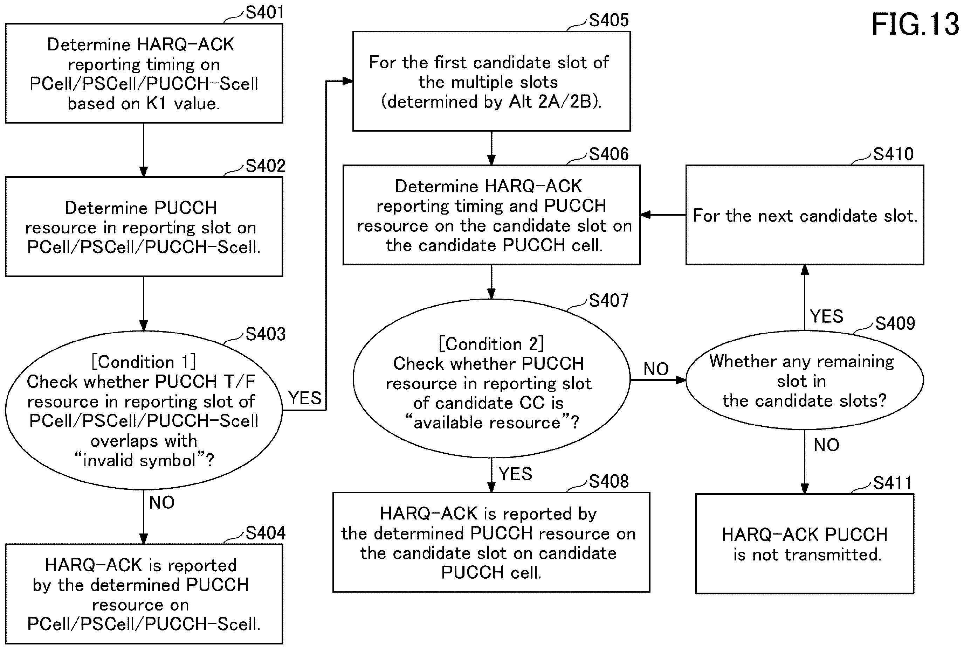

   Fig. 13 is a diagram illustrating an example of an operation of the terminal.
[Fig. 14]

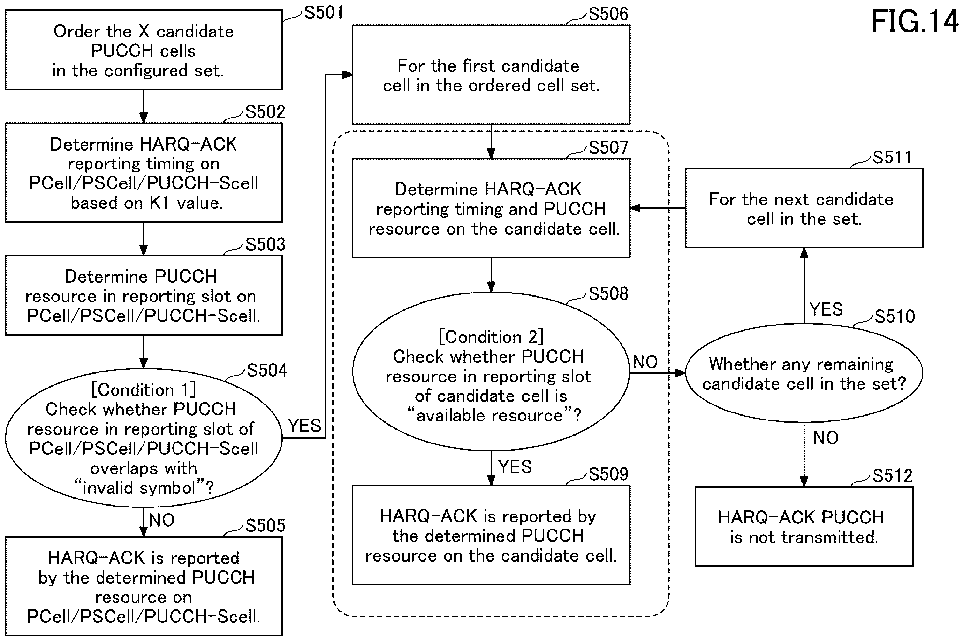

   Fig. 14 is a diagram illustrating an example of an operation of the terminal.
[Fig. 15]

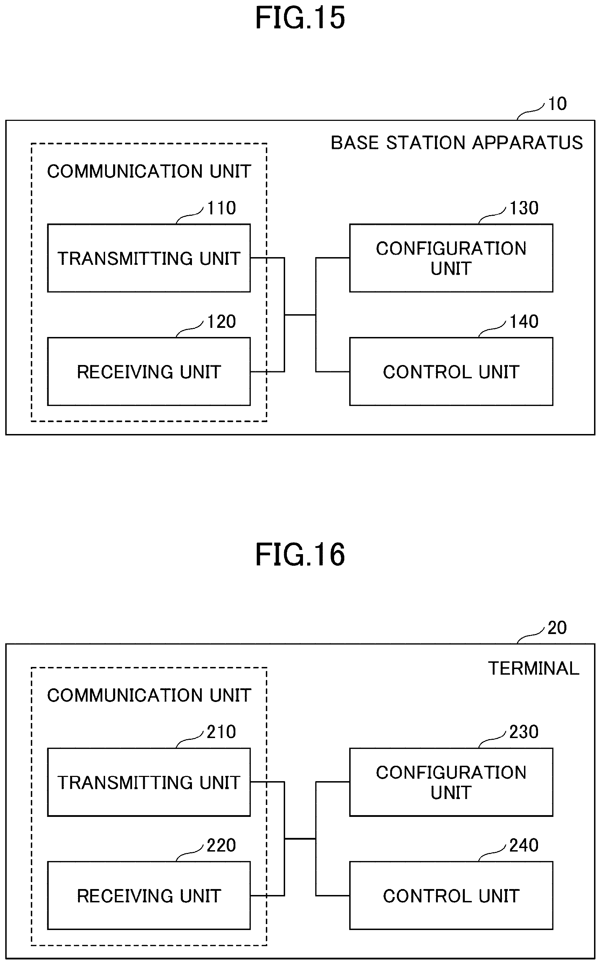

   Fig. 15 is a diagram illustrating an example of a functional configuration of a base station according to an embodiment of the present invention.
[Fig. 16]
   Fig. 16 is a diagram illustrating an example of a functional configuration of the terminal according to an embodiment of the present invention.
[Fig. 17]

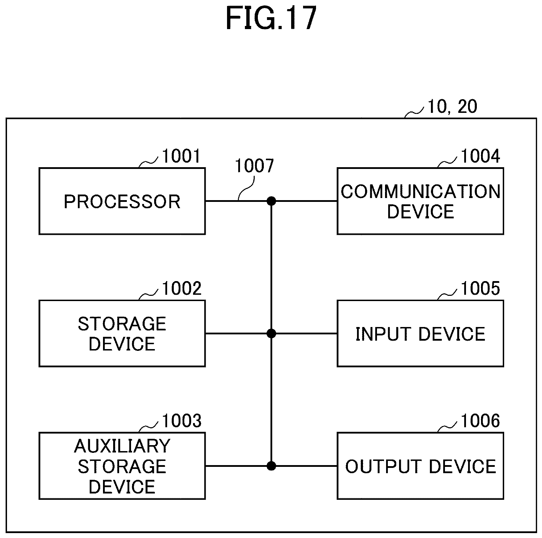

   Fig. 17 is a diagram illustrating an example of a hardware configuration of the base station or the terminal according to an embodiment of the present invention.
[Fig. 18]

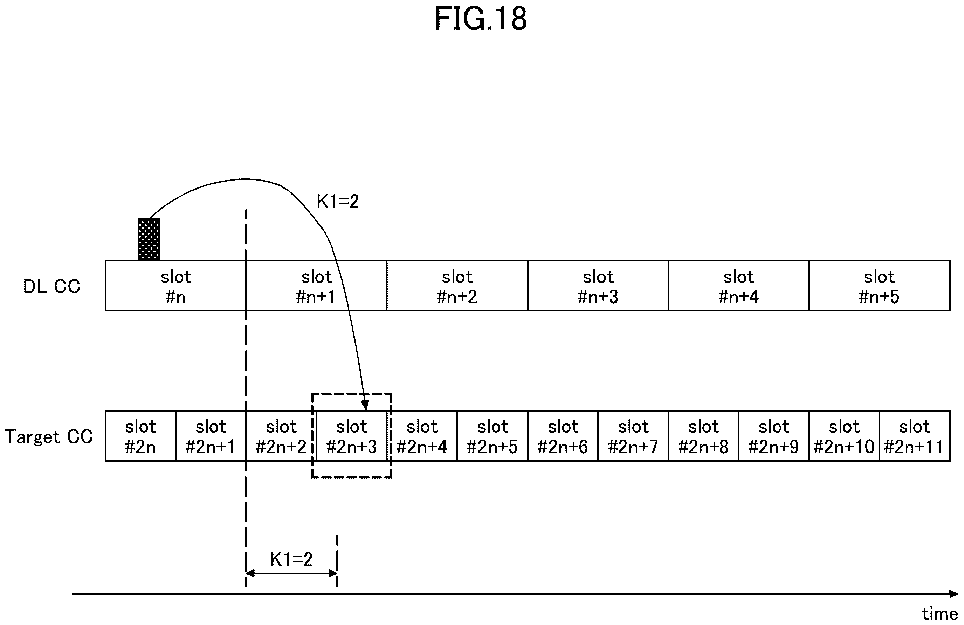

   Fig. 18 is a diagram illustrating an example of Option A2-1-1.
[Fig. 19]

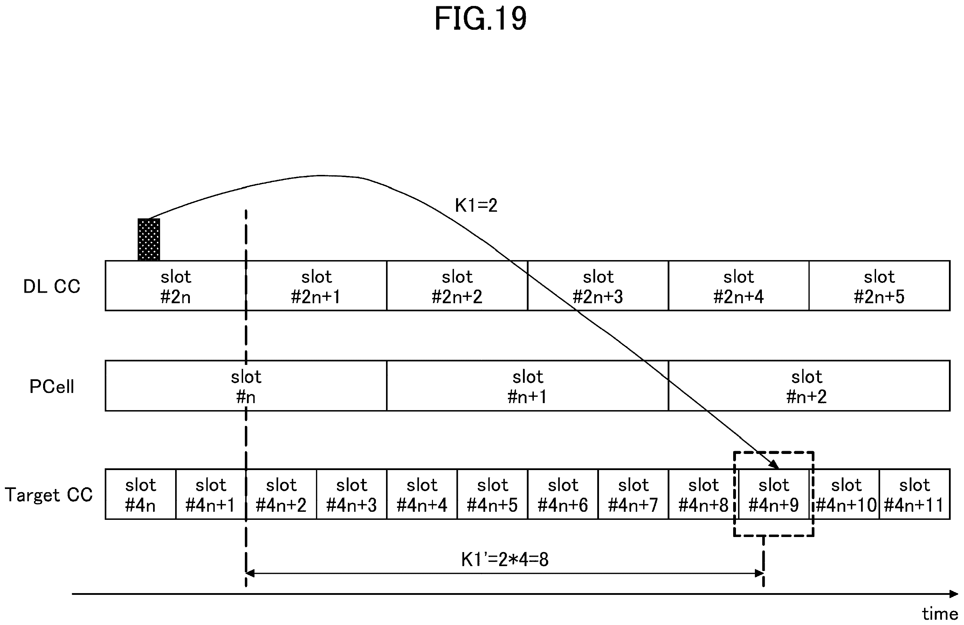

   Fig. 19 is a diagram illustrating an example of Option A2-1-2.
[Fig. 20]

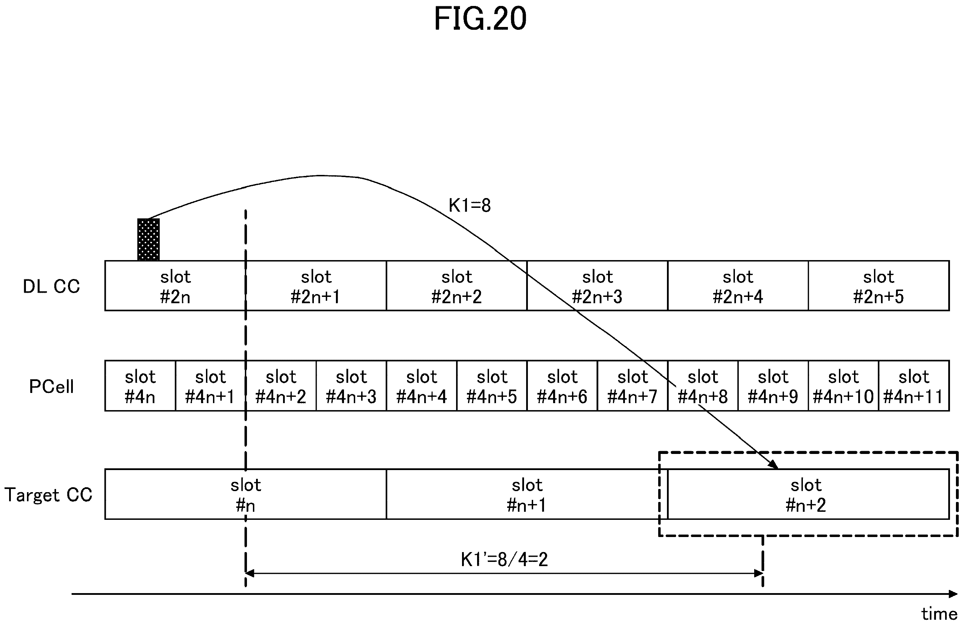

   Fig. 20 is a diagram illustrating another example of Option A2-1-2.
[Fig. 21]

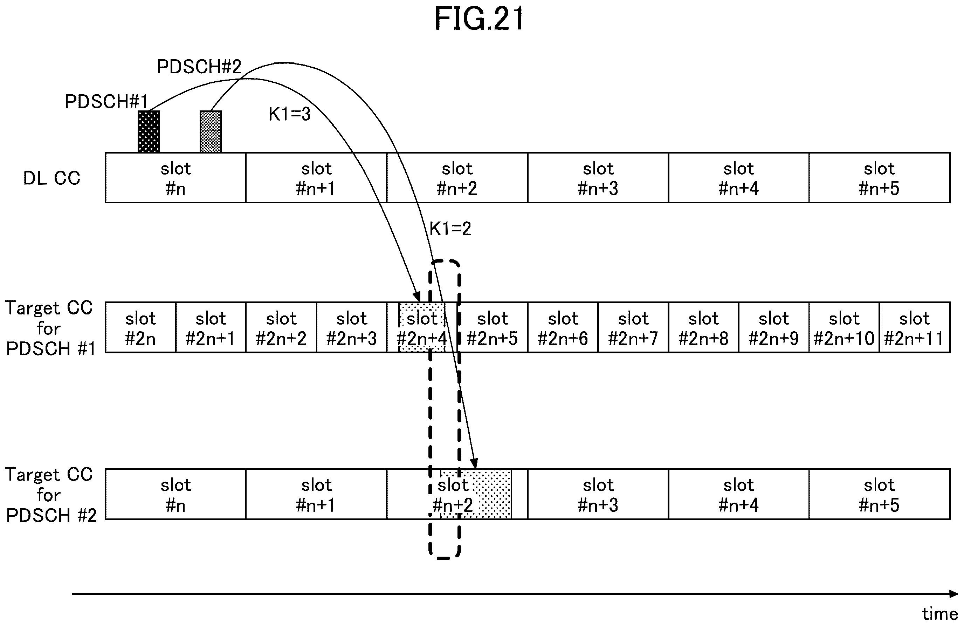

   Fig. 21 is a diagram illustrating an example in which HARQ-ACK transmissions in different cells overlap in a time domain.
[Fig. 22]

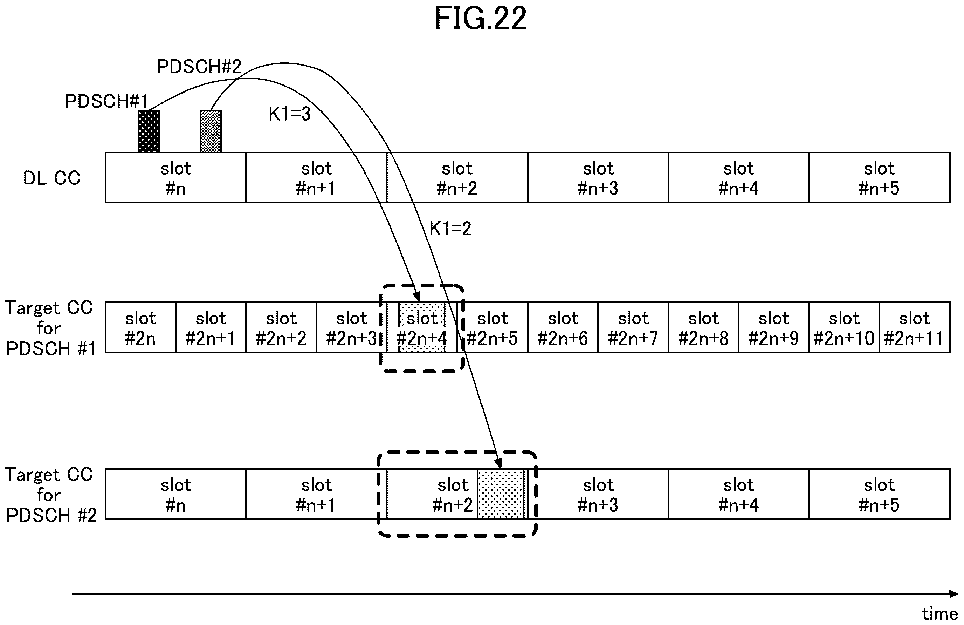

   Fig. 22 is a diagram illustrating an example in which HARQ-ACK transmissions in different cells overlap in a time domain.
[Fig. 23]

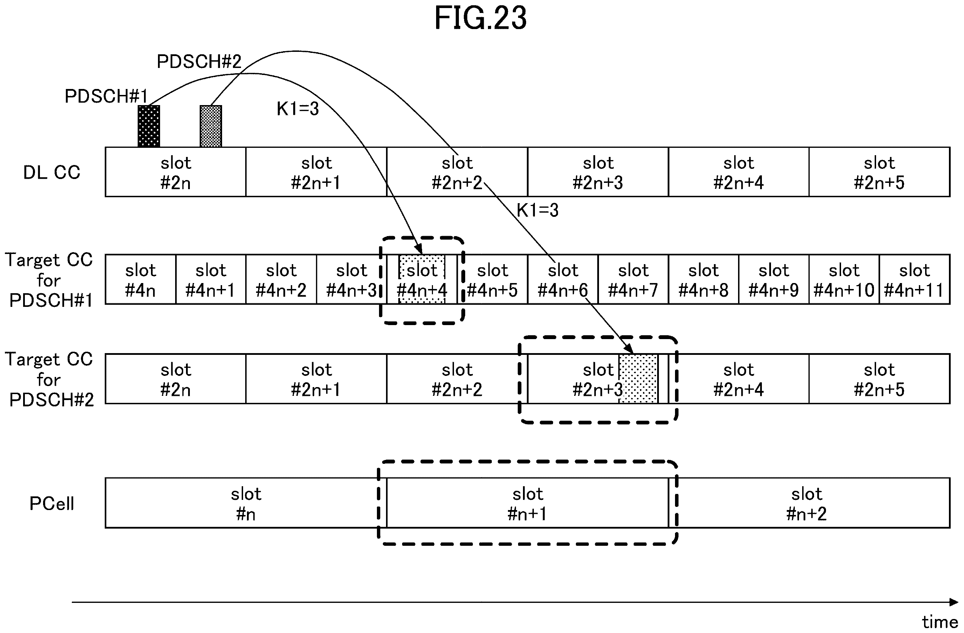

   Fig. 23 is a diagram illustrating an example in which HARQ-ACK transmissions in different cells overlap in a time domain.
[Fig. 24]

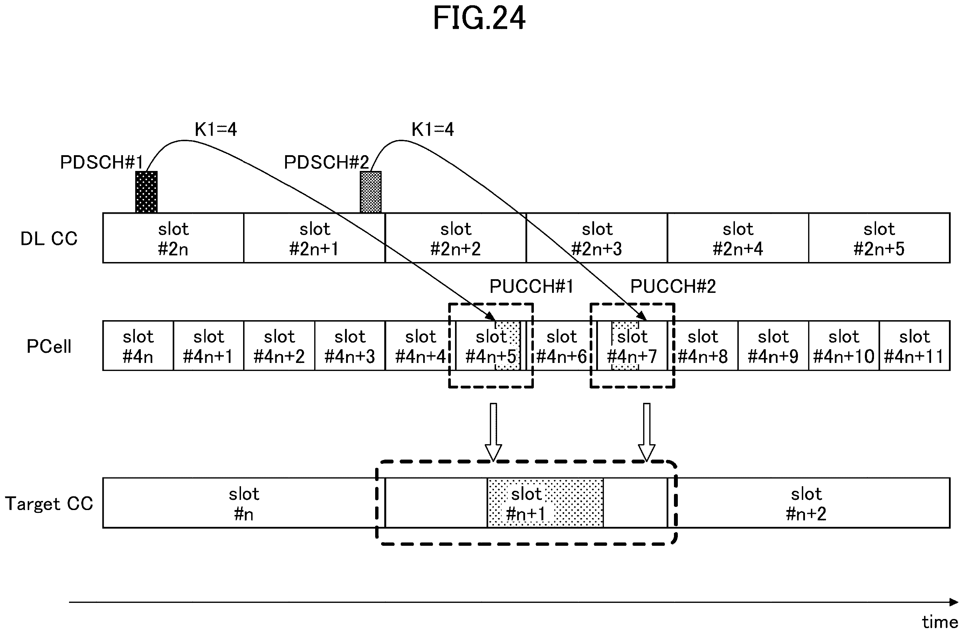

   Fig. 24 is a diagram illustrating an example in which HARQ-ACK transmissions in a switching destination cell overlap.
[Fig. 25]

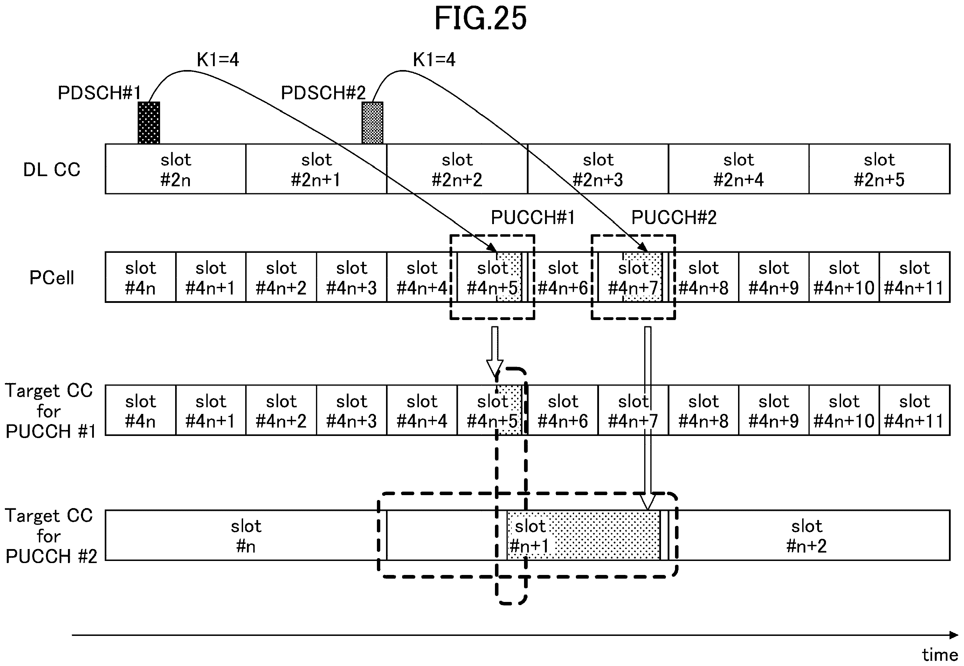

   Fig. 25 is a diagram illustrating an example in which HARQ-ACK transmissions in a changed cell overlap.
[Fig. 26]

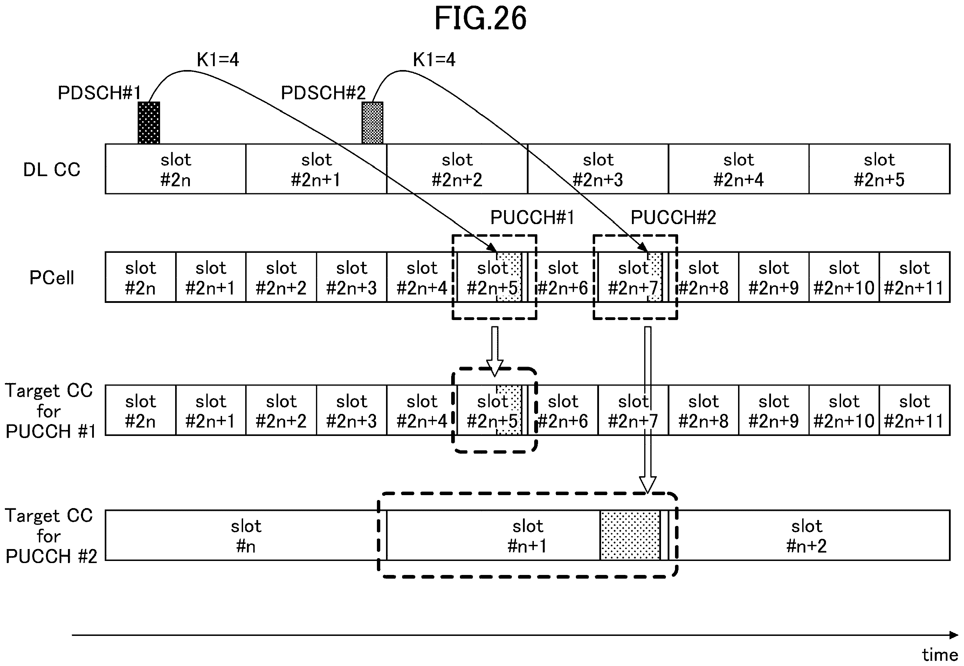

   Fig. 26 is a diagram illustrating an example in which HARQ-ACK transmissions in a changed cell overlap.

### [Description of Embodiments]

In the following, embodiments of the present invention are described with reference to the drawings. Note that, the embodiments described below are examples, and embodiments to which the present invention is applied are not limited to the following embodiments.

In operating a radio communication system according to an embodiment of the present invention, existing technology may be used as appropriate. The existing technology is, for example, an existing NR or LTE, but is not limited to an existing NR or LTE.

### (System Configuration)

Fig. 1 is a diagram illustrating a radio communication system according to an embodiment of the present invention. The radio communication system according to an embodiment of the present invention includes a base station 10 and a terminal 20, as illustrated in Fig. 1. In Fig. 1, one base station 10 and one terminal 20 are illustrated. However, this is an example, and there may be a plurality of base stations 10 and a plurality of terminals 20.

The base station 10 is a communication device that provides one or more cells and performs radio communication with the terminal 20. A physical resource of a radio signal is defined in a time domain and a frequency domain, the time domain may be defined by a number of OFDM symbols, and the frequency domain may be defined by a number of sub-carriers or a number of resource blocks. A Transmission Time Interval (TTI) in the time domain may be a slot, or the TTI may be a subframe.

The base station 10 can perform carrier aggregation in which communication is performed with the terminal 20 by bundling a plurality of cells (a plurality of component carriers (CCs)). For carrier aggregation, one primary cell (PCell) and one or more secondary cells (SCells) are used.

The base station 10 transmits synchronization signals, system information, and the like to the terminal 20. The synchronization signals are, for example, NR-PSS and NR-SSS. System information is transmitted, for example, on NR-PBCH or PDSCH, and is also called broadcast information. As illustrated in Fig. 1, the base station 10 transmits a control signal or data to the terminal 20 via Downlink (DL) and receives a control signal or data from the terminal 20 via Uplink (UL). Here, a signal transmitted on a control channel, such as a PUCCH or a PDCCH, is referred to as a control signal, and a signal transmitted on a shared channel, such as a PUSCH or a PDSCH, is referred to as data. However, such names are examples.

The terminal 20 is a communication device provided with a radio communication function, such as a smartphone, a cellular phone, a tablet, a wearable terminal, or a communication module for Machine-to-Machine (M2M). As illustrated in Fig. 1, the terminal 20 utilizes various types of communication services provided by a radio communication system by receiving control signals or data via DL from the base station 10 and transmitting control signals or data via UL to the base station 10. The terminal 20 may be referred to as a UE, and the base station 10 may be referred to as a gNB.

The terminal 20 can perform carrier aggregation in which communication is performed with the base station 10 by bundling a plurality of cells (a plurality of component carriers (CCs)). For the carrier aggregation, one primary cell (PCell) and one or more secondary cells (SCells) are used. A PUCCH-SCell having a PUCCH may also be used.

Fig. 2 illustrates an example of a configuration of a radio communication system in a case in which Dual connectivity (DC) is executed. As illustrated in Fig. 2, a base station 10A serving as a Master Node (MN) and a base station 10B serving as a Secondary Node (SN) are provided. Each of the base station 10A and the base station 10B is connected to a core network. The terminal 20 can communicate with both the base station 10A and base station 10B.

A cell group provided by the base station 10A that is a MN is called a Master Cell Group (MCG), and a cell group provided by the base station 10B that is an SN is called a Secondary Cell Group (SCG). Furthermore, in DC, a MCG includes one PCell and one or more SCells, and an SCG includes one Primary SCell (PSCell) and one or more SCells.

The processing operation according to the embodiments may be performed in the system configuration illustrated in Fig. 1, in the system configuration illustrated in Fig. 2, or may be performed in another system configuration.

### (Dual Connectivity)

Fig. 3 is a diagram illustrating an example of dual connectivity (DC). In the example of Fig. 3, the base station 10-1 is a Master Node (MN). The base station 10-2 is a Secondary Node (SN). As illustrated in the example of Fig. 3, in the DC, carriers of different base stations are bundled.

In the example of Fig. 3, the base station 10-1 communicates with the terminal 20 via a primary cell (PCell) and a secondary cell (SCell). In the example of Fig. 3, the terminal 20 has established an RRC connection with the base station 10-1.

In the case of the DC, since latency of the communication between the base station 10-1 and the base station 10-2 is large, it is difficult to transmit, in real time, uplink control information (UCI) received via the PCell of the base station 10-1 to the base station 10-2 via a backhaul link, so that the UCI is reflected in the scheduling of the SCell under control of the base station 10-2. Accordingly, in DC, in addition to a PCell of the base station 10-1, one carrier under the control of the base station 10-2 is configured as a Primary SCell (PSCell), and a PUSCH transmission in the PSCell is supported. Accordingly, as illustrated in the example of Fig. 3, the terminal 20 directly transmits the UCI to the base station 10-2 via the PSCell.

In the example of Fig. 3, the terminal 20 configures an SCell for the base station 10-1 in addition to the PCell. The terminal 20 configures an SCell for the base station 10-2 in addition to the PSCell. The terminal 20 transmits the UCI of each carrier under control of the base station 10-1 via a PUCCH of the PCell. The terminal 20 transmits the UCI of each carrier under the control of the base station 10-2 via a PUCCH of the PSCell. In the example of Fig. 3, the cell group (CG) under the control of the base station 10-1 is referred to as a Master Cell-Group (MCG). The cell group under the control of the base station 10-2 is referred to as the Secondary Cell-Group (SCG).

When the DC is configured, the terminal 20 performs a PUCCH transmission via a PCell, a PSCell, and/or a PUCCH-SCell. In general, it is not assumed that the terminal 20 performs a PUCCH transmission via an SCell other than a PCell, a PSCell, and a PUCCH-SCell.

The "PUCCH carrier switching" has been studied for the extension of the Ultra-Reliable and Low Latency Communications (URLLC) technology in the 3GPP release 17. The "PUCCH Carrier switching" has been studied as a method of reducing latency of a Hybrid Automatic Repeat reQuest-ACKnowledgement (HARQ-ACK) feedback in a Time Division Duplex (TDD) method.

Fig. 4 is a diagram illustrating an example of "PUCCH carrier switching." In the example of Fig. 4, the base station 10 and the terminal 20 communicate via a cell 1 and a cell 2. In the example of Fig. 4, the cell 1 is a PCell and the cell 2 is an SCell.

In the example of Fig. 4, the terminal 20 receives data (receives PDSCH) at the timing of S101. The terminal 20 attempts to transmit the HARQ-ACK at the timing of S102 for the data received at S101, but at the timing of S102, a slot of the cell 1 is a downlink (DL) slot. Accordingly, in a case where the terminal 20 transmits the HARQ-ACK in the cell 1, it is necessary to hold the transmission of the HARQ-ACK until a transmission occasion of a PUCCH in an uplink (UL) slot (timing of S103 in Fig. 4), and the latency (delay) of the transmission of the HARQ-ACK increases.

In the example of Fig. 4, at the timing of S102, the slot in the cell 2 is a UL slot. In general, it is not assumed that the terminal 20 performs a PUCCH transmission in an SCell. However, in the example of Fig. 4, if it is possible for the terminal 20 to transmit the HARQ-ACK for the data received at S101 in a transmission occasion of a PUCCH at the timing of S102 of the cell 2, the latency in the HARQ-ACK transmission can be reduced. In the URLLC, in particular, low latency in the radio section is required. Accordingly, in the 3GPP, as an extension of the URLLC technology, "PUCCH carrier switching" has been studied in which the terminal 20 changes a carrier for performing a PUCCH transmission.

In the following embodiments, "the same timing" may be exactly the same timing, or "the same timing" may refer to a case where the whole of or a portion of a time resource (e.g., one or more symbols (or may be a time resource shorter than one symbol)) overlaps.

The "PUCCH carrier switching" may be such that, when the terminal 20 attempts to perform a PUCCH transmission in a PCell (which may be a PSCell or a PUCCH-SCell) at a specific transmission timing, since the slot at the specific transmission timing in the PCell (which may be the PSCell or the PUCCH-SCell) is a DL slot, the terminal 20 switches the cell for performing the PUCCH transmission from the PCell (which may be the PSCell or the PUCCH-SCell) to an SCell of one or more SCells (in the case of the PSCell, an SCell other than the PSCell, and in the case of the PUCCH-SCell, an SCell other than the PUCCH-SCell) having a UL slot as a slot at a timing that is the same as the specific transmission timing. In an embodiment of the present invention, a unit of the specific transmission timing is not limited to a slot. For example, a specific transmission timing may be a timing in units of a subframe, or in units of a symbol.

In the 3GPP meeting, two methods have been studied to implement the "PUCCH carrier switching." The first method is a method in which the base station 10 dynamically indicates a carrier for performing a PUCCH transmission to the terminal 20. The second method is a method in which the base station 10 semi-statically configures a carrier for performing a PUCCH transmission to the terminal 20. Note that, in the following embodiments, "PUCCH transmission" and "transmitting a PUCCH" may be transmitting uplink control information via a PUCCH.

In connection with the implementation of the "PUCCH carrier switching", a restriction on a candidate cell for transmitting a PUCCH, a method of configuring by using RRC signaling, an operation of the terminal 20, or the like is to be considered.

### (Proposal 1)

In a case of executing the "PUCCH carrier switching", the following Options 1-1 and Option 1-2 may be applied as a restriction on a candidate cell for transmitting a PUCCH.

### (Option 1-1)

The base station 10 need not apply any restriction to a candidate cell for transmitting a PUCCH.

For example, when the "PUCCH carrier switching" is to be performed in a MCG, the base station 10 may configure any SCell of the MCG as the candidate cell for the terminal 20 to transmit the PUCCH, provided that the SCell has a slot configured as a UL slot at a timing that is the same as the timing at which the PUCCH transmission is to be performed in the PCell.

Similarly, for example, when the "PUCCH carrier switching" is to be performed in a SCG, the base station 10 may configure any SCell of the SCG other than the PSCell as the candidate cell for the terminal 20 to transmit the PUCCH, provided that the SCell has a slot configured as a UL slot at a timing that is the same as the timing at which the PUCCH transmission is to be performed in the PSCell.

Similarly, for example, when the "PUCCH carrier switching" is to be performed for a PUCCH-SCell, the base station 10 may configure any SCell associated with the PUCCH-SCell other than the PUCCH-SCell as the candidate cell for the terminal 20 to transmit the PUCCH, provided that the SCell has a slot configured as a UL slot at a timing that is the same as the timing at which the PUCCH transmission is to be performed in the PSCell.

In the case of Option 1-1, since there is no specific restriction on a candidate cell for transmitting a PUCCH, the "PUCCH carrier switching" can be implemented more flexibly.

### (Optionl-2)

The base station 10 may apply a restriction on subcarrier spacing (SCS) for a candidate cell for transmitting a PUCCH.

For example, when the "PUCCH carrier switching" is to be performed in a MCG, the base station 10 may configure any one of one or more SCells of the MCG having a slot configured as a UL slot at a timing that is the same as the timing at which the PUCCH transmission is to be performed in the PCell and having subcarrier spacing that is the same as the subcarrier spacing of the PCell, as the candidate cell for the terminal 20 to perform the PUCCH transmission.

Similarly, for example, when the "PUCCH carrier switching" is to be performed in an SCG, the base station 10 may configure any one of one or more SCells, other than the PSCell, of the SCG having a slot configured as a UL slot at a timing that is the same as the timing at which the PUCCH transmission is to be performed in the PSCell and having subcarrier spacing that is the same as the subcarrier spacing of the PSCell, as the candidate cell for the terminal 20 to perform the PUCCH transmission.

Similarly, for example, when the "PUCCH carrier switching" is to be performed for a PUCCH-SCell, the base station 10 may configure any one of one or more SCells, other than the PUCCH-SCell, associated with the PUCCH-SCell having a slot configured as a UL slot at a timing that is the same as the timing at which the PUCCH transmission is to be performed in the PSCell and having subcarrier spacing that is the same as the subcarrier spacing of the PSCell, as the candidate cell for the terminal 20 to perform the PUCCH transmission.

In this case, the slot length of the candidate cell for transmitting the PUCCH is the same as the slot length of the PCell (or the PSCell or the PUCCH-SCell). Accordingly, compared to a case where the slot lengths differ between the carriers, the operation for changing the carrier can be simplified.

### (Option 1-2-1)

The base station 10 may select an SCell having subcarrier spacing that is less than or equal to the subcarrier spacing of the PCell (or the PSCell, or the PUCCH-SCell), as the candidate of the cell for transmitting the PUCCH.

### (Option 1-2-2)

The base station 10 may select a SCell having a subcarrier spacing greater than or equal to the subcarrier spacing of the PCell (or the PSCell or the PUCCH-SCell) as a candidate cell for transmitting PUCCH.

### (Proposal 2)

In a case of executing the "PUCCH carrier switching," the base station 10 may configure a candidate of a cell for transmitting the PUCCH for the terminal 20 by RRC signaling.

### (Option 2-1)

The base station 10 may configure, on a per cell group (a MCG, a SCG, or a PUCCH Cell group) basis, PUCCH resources for up to X cells (e.g., X = 1), other than the PCell, PSCell, or the PUCCH-SCell.

For example, when X = 1, if a specific time and frequency domain resource of a PCell, a PSCell, or a PUCCH-SCell for transmitting a PUCCH overlaps an invalid symbol for an uplink transmission, the terminal 20 may attempt to transmit the PUCCH through another cell in the corresponding cell group for which the PUCCH resource is configured.

Furthermore, for example, when X > 1, if a specific time and frequency domain resource of a PCell, a PSCell, or a PUCCH-SCell for transmitting a PUCCH overlaps an invalid symbol for an uplink transmission, the terminal 20 may attempt to transmit the PUCCH through any one of the other cells in the corresponding cell group for which the PUCCH resource is configured.

### (Option 2-2)

The base station 10 may configure, on a per cell group (a MCG, an SCG, or a PUCCH cell group) basis, PUCCH resources for up to X cells, other than the PCell, the PSCell, or the PUCCH-SCell. In this case, the base station 10 may configure a timing pattern for X+1 cells (e.g., X = 1), and the base station 10 may apply the timing pattern to the terminal 20 so that the timing pattern is periodically applied.

### (Option 2-2-1)

The timing pattern may indicate that any one of the X+1 cells can be used for transmitting a PUCCH for each unit time (e.g., slot) included in a specific time interval. For example, if it is necessary to transmit a PUCCH in a PCell, a PSCell, or a PUCCH-SCell, the terminal 20 may determine a cell for transmitting a PUCCH from among the X+1 cells by referring to the timing pattern.

### (Option 2-2-2)

The timing pattern may indicate that, for each unit time (e.g., slot) included in a specific time interval, up to N of the X+1 cells (where N is an integer less than or equal to X+1) can be used for transmitting a PUCCH. For example, if it is necessary to transmit a PUCCH in a PCell, a PSCell, or a PUCCH-SCell, the terminal may determine a cell for transmitting a PUCCH from among the X+1 cells by referring to a timing pattern.

Fig. 5 is a diagram illustrating an example of a timing pattern. In the example of Fig. 5, the subcarrier spacing of the PCell and the subcarrier spacing of the candidate cell (CC#1) are the same. In the example of Fig. 5, the TDD configuration configured for the PCell is different from the TDD configuration configured for the CC#1. In the TDD configuration illustrated in Fig. 5, each slot is configured for an uplink transmission (U in Fig. 5), a downlink transmission (D in Fig. 5), or switching (S in Fig. 5).

In the example of Fig. 5, for the PCell, the terminal 20 can transmit a PUCCH in a slot indicated as U. Accordingly, as illustrated in Fig. 5, for the PCell, the bit of the timing pattern is set to 1 for the timing at which the slot is configured as U. For the timing at which the slot is configured as D and for the timing at which the slot is configured as S, the bit of the timing pattern is set to 0.

Similarly, in the example of Fig. 5, for the CC#1, the terminal 20 can transmit a PUCCH in a slot indicated as U. Accordingly, as illustrated in Fig. 5, for the CC#1, the bit of the timing pattern is set to 1 for the timing at which the slot is configured as U. For the timing at which the slot is configured as D and the timing at which the slot is configured as S, the bit of the timing pattern is set to 0.

Fig. 6 is a diagram illustrating an example of a timing pattern. In the example of Fig. 6, the subcarrier spacing of the PCell is less than the subcarrier spacing of the candidate cell (CC#1). In the example of Fig. 6, for the PCell, the bit of the timing pattern is set to 1 for the timing at which the slot is configured as U, and the bit of the timing pattern is set to 0 for the timing at which the slot is configured as D and the timing at which the slot is configured as S. Similarly, in the example of Fig. 6, for the CC #1, the bit of the timing pattern is set to 1 for the timing at which the slot is configured as U. For the timing at which the slot is configured as D and the timing at which the slot is configured as S, the timing pattern bit is set to 0.

Fig. 7 is a diagram illustrating an example of a timing pattern. In the example of Fig. 7, the subcarrier spacing of the PCell is greater than the subcarrier spacing of the candidate cell (CC#1). In the example of Fig. 7, for the PCell, the bit of the timing pattern is set to 1 for the timing at which the slot is configured as U, and the bit of the timing pattern is set to 0 for the timing at which the slot is configured as D and the timing at which the slot is configured as S. Similarly, in the example of Fig. 7, for the CC #1, the bit of the timing pattern is set to 1 for the timing at which the slot is configured as U. For the timing at which the slot is configured as D and the timing at which the slot is configured as S, the timing pattern bit is set to 0.

As for a configuration of a PUCCH resource, in Release 16, it is allowed to configure two configurations, which are high priority PUCCH-Config and low priority PUCCH-Config, for a PCell, a PSCell, or a PUCCH-SCell. When the two PUCCH-Configs are to be configured for the PCell, the PSCell, or the PUCCH-SCell, the two PUCCH-Configs may be configured for the other X cells. When only one PUCCH-Config is to be configured for the PCell, the PSCell, or the PUCCH-SCell, the one PUCCH-Config may be configured for the other X cells.

Accordingly, if timings for two PUCCH transmissions based on the high priority PUCCH-Config and the low priority PUCCH-Config, which is configured for a PCell, a PSCell, or a PUCCH-SCell, conflict, and the resource of the PCell, the PSCell, or the PUCCH-SCell at that timing is configured for a downlink transmission, the terminal 20 may perform only the PUCCH transmission corresponding to the high priority PUCCH-Config between the configured two PUCCH-Configs in any cell of the other X cells.

Furthermore, as for a configuration of a PUCCH resource, in Release 16, by using the subslotLengthForPUCCH-r16 in the PUCCH-Config, it can be specified as to whether the configuration is in units of a slot, or the configuration is in units of a sub-slot. In a case where two PUCCH-Configs are configured for the other X cells, the configuration of the subslotLengthForPUCCH-r16 in each PUCCH-Config may be the same as the configuration of the subslotLengthForPUCCH-r16 in the PUCCH-Config for the PCell, the PSCell, or the PUCCH-SCell having the corresponding same priority.

For a TDD UL/DL pattern, if one or more UL symbols are semi-statically configured for a PCell, a PSCell, or a PUCCH-SCell, it may not be expected that one or more UL symbols are configured for the other X cells at the timing that is the same as the timing at which the one or more UL symbols are semi-statically configured. Furthermore, when one or more UL symbols are semi-statically configured for one cell of the X cells, it may not be expected that one or more UL symbols are configured for the other X-1 cells at the timing that is the same as the timing at which the one or more UL symbols are semi-statically configured.

### (Proposal 3)

In a case where the "PUCCH carrier switching" is to be executed, the terminal 20 may perform an operation to determine whether a PUCCH transmission is performed in an SCell other than a PCell, a PScell, or a PUCCH-SCell.

Fig. 8 is a diagram illustrating an example of an operation of the terminal 20 in a case where the "PUCCH carrier switching" is to be performed. In the example of Fig. 8, it is assumed that the number of candidate cells for transmitting a PUCCH is 1 (X = 1).

In step S201, the terminal 20 determines a timing for transmitting a HARQ-ACK in a PCell, a PSCell, or a PUCCH-SCell, based on a K1 value. In step S202, the terminal 20 determines a PUCCH resource in a slot at the timing at which the HARQ-ACK is to be transmitted in the PCell, the PSCell, or the PUCCH-SCell.

In step S203, the terminal 20 determines whether the PUCCH resource (a time and frequency domain resource) determined in step S202 overlaps an invalid symbol. When a determination is made in step S203 that the PUCCH resource does not overlap the invalid symbol, in step S204, the terminal 20 transmits the HARQ-ACK by using the determined PUCCH resource.

If it is determined in step S203 that the PUCCH resource overlaps an invalid symbol, the terminal 20 determines, in step S205, a timing for transmitting the HARQ-ACK and a PUCCH resource in a cell candidate for transmitting a PUCCH.

In step S206, the terminal 20 determines whether the PUCCH resource in the candidate cell for transmitting the PUCCH is a usable resource. In step S206, when a determination is made that the PUCCH resource is a usable resource, the terminal 20 transmits, in step S207, the HARQ-ACK on the PUCCH resource determined to be usable in the candidate cell for transmitting the PUCCH.

When a determination is made in step S206 that the PUCCH resource is not a usable resource, the terminal 20 does not transmit the HARQ-ACK in step S208 on the PUCCH resource determined not to be usable in the candidate cell for transmitting the PUCCH.

In the example of Fig. 8, the "invalid symbol" may be a symbol that satisfies one or more of the following conditions A to I. Which of the following conditions A to I should be applied may be specified by a technical specification, or configured by the RRC.

Condition A: a symbol that is semi-statically configured as DL by tdd-UL-DL-ConfigurationCommon and/or tdd-UL-DL-ConfigurationDedicated.

Condition B: a symbol that is configured for reception of a synchronization signal block (SSB).

Condition C: a symbol that is configured for reception of Control Resource Set Zero (CORESET#0).

Condition D: a symbol that is semi-statically configured as flexible, regardless of whether a slot format indicator (SFI) is configured.

Condition E: a symbol that is semi-statically configured as flexible, regardless of an indication by an SFI, in a case where the SFI is configured.

Condition F: a symbol that is semi-statically configured as flexible and that is dynamically configured as flexible/DL by an SFI.

Condition G: a symbol that is semi-statically configured as flexible and for which an SFI is configured but the SFI is not received.

Condition I: a symbol that is semi-statically configured as flexible and that is dynamically configured for DL reception by DCI.

Furthermore, the usable resource in Fig. 8 may be a PUCCH resource that does not overlap an unusable symbol. Here, the "unusable symbol" may be a symbol that satisfies one or more of the above-described conditions A to I. Which of the conditions A to I should be applied to the "unusable symbol" may be specified by a technical specification, or configured by the RRC. Note that the condition applied to the "unusable symbol" may be the same as the condition applied to the "invalid symbol," or may be different from the condition applied to the "invalid symbol."

In step S205 of Fig. 8, the terminal 20 determines the timing for transmitting the HARQ-ACK and the PUCCH resource in the candidate cell for transmitting the PUCCH. There are three cases for determining the timing for transmitting the HARQ-ACK and the PUCCH resource in step S205. The three cases are as follows: (1) a case where the subcarrier spacing of the PCell, the PSCell, or the PUCCH-SCell is the same as the subcarrier spacing of the candidate cell for transmitting the PUCCH; (2) the subcarrier spacing of the PCell, the PSCell, or the PUCCH-SCell is greater than the subcarrier spacing of the candidate cell for transmitting the PUCCH; and (3) the subcarrier spacing of the PCell, the PSCell, or the PUCCH-SCell is less than the subcarrier spacing of the candidate cell for transmitting the PUCCH.

Fig. 9 is a diagram illustrating an example where the subcarrier spacing of the PCell, the PSCell, or the PUCCH-SCell is the same as the subcarrier spacing of the candidate cell for transmitting the PUCCH. In this case, the slot of the PCell, the PSCell, or the PUCCH-SCell may correspond one-to-one to the slot of the candidate cell for transmitting the PUCCH. Accordingly, the slot for transmitting the HARQ-ACK in the candidate cell for transmitting the PUCCH may correspond to the slot in the PCell in which the HARQ-ACK should be transmitted.

Fig. 10 is a diagram illustrating an example where the subcarrier spacing of the PCell, the PSCell, or the PUCCH-SCell is greater than the subcarrier spacing of the candidate cell for transmitting the PUCCH. In this case, multiple slots of the PCell, the PSCell, or the PUCCH-SCell may correspond to one slot of the candidate cell for transmitting the PUCCH. Accordingly, the slot for transmitting the HARQ-ACK in the candidate cell for transmitting the PUCCH may be a slot that overlaps the slot in the PCell in which the HARQ-ACK should be transmitted. In this case, multiple HARQ-ACKs that should be transmitted in different slots in the PCell, the PSCell, or the PUCCH-SCell may be transmitted in a single slot in the candidate cell for transmitting the PUCCH. In this case, the terminal 20 need not expect that the multiple HARQ-ACKs to be transmitted in different slots in the PCell, the PSCell, or the PUCCH-SCell are to be transmitted in the single slot in the candidate cell for transmitting the PUCCH. Alternatively, if a condition of a timing for the HARQ-ACKs (a condition defined by the timing indicated by a K value) is satisfied, the terminal 20 may transmit the multiple HARQ-ACKs that should be transmitted in different slots in the PCell, the PSCell, or the PUCCH-SCell in the single slot in the candidate cell for transmitting the PUCCH by applying a HARQ-ACK codebook.

Fig. 11 is a diagram illustrating a first example where the subcarrier spacing of the PCell, the PSCell, or the PUCCH-SCell is less than the subcarrier spacing of the candidate cell for transmitting the PUCCH. In this case, one slot of the PCell, the PSCell, or the PUCCH-SCell overlaps multiple slots of the candidate cell for transmitting the PUCCH in the direction of time.

The determination of the timing for transmitting the HARQ-ACK and the PUCCH resource in step S205 of Fig. 8 and the determination in step S206 of Fig. 8 of whether the PUCCH resource in the candidate cell for transmitting the PUCCH is a usable resource may be made only for one slot in the candidate cell for transmitting the PUCCH.

The one slot in the candidate cell for transmitting the PUCCH may be any one of multiple slots in the candidate cell for transmitting the PUCCH (e.g., the first or the last slot of the multiple slots) that overlaps, in the direction of time, the slot in the PCell, the PSCell, or the PUCCH-SCell in which the HARQ-ACK should be transmitted (Alt 1A in Fig. 11). Alternatively, the one slot in the candidate cell for transmitting the PUCCH may be any one of multiple slots in the candidate cell for transmitting the PUCCH (e.g., the first or the last slot of the multiple slots) that overlaps, in the direction of time, the slot in the PCell, the PSCell, or the PUCCH-SCell in which the PUCCH transmission should be performed (Alt 1B in Fig. 11).

Fig. 12 is a diagram illustrating a second example where the subcarrier spacing of the PCell, the PSCell, or the PUCCH-SCell is less than the subcarrier spacing of the candidate cell for transmitting the PUCCH. In this case, one slot of the PCell, the PSCell, or the PUCCH-SCell overlaps multiple slots of the candidate cell for transmitting the PUCCH in the direction of time.

The determination of the timing for transmitting the HARQ-ACK and the PUCCH resource in step S205 of Fig. 8 and the determination in step S206 of Fig. 8 of whether the PUCCH resource in the candidate cell for transmitting the PUCCH is a usable resource may be made for multiple slots in the candidate cell for transmitting the PUCCH.

The multiple candidate slots in the candidate cell for transmitting the PUCCH may be multiple slots in the candidate cell for transmitting the PUCCH that overlap, in the direction of time, the slot in the PCell, the PSCell, or the PUCCH-SCell in which the HARQ-ACK should be transmitted (Alt 2A in Fig. 12). Alternatively, the one slot in the candidate cell for transmitting the PUCCH may be multiple slots in the candidate cell for transmitting the PUCCH that overlaps, in the direction of time, the slot in the PCell, the PSCell, or the PUCCH-SCell in which the PUCCH transmission should be performed (Alt 2B in Fig. 12).

Fig. 13 is a diagram illustrating an example in which the determination of the timing for transmitting the HARQ-ACK and the PUCCH resource, and the determination of whether the PUCCH resource is a usable resource are made for multiple slots in the candidate cell for transmitting the PUCCH.

S401-S404 of Fig. 13 may be the same as S201-S204 of Fig. 8. In S405 of Fig. 13, the terminal 20 selects the first slot with respect to the time direction from among the multiple candidate slots (Alt 2A or Alt 2B of Fig. 12).

In step S406, the terminal 20 determines the timing for transmitting the HARQ-ACK and the PUCCH resource in the candidate slot of the candidate cell for transmitting the PUCCH.

In step S407, the terminal 20 determines whether the resource of the candidate cell for transmitting the PUCCCH on which the HARQ-ACK is to be transmitted is a usable resource. In response to determining that the PUCCH resource is a usable resource in step S407, the terminal 20 transmits, in step S408, the HARQ-ACK in the candidate slot determined to be usable in the candidate cell for transmitting the PUCCH.

In step S407, in response to determining that the PUCCH resource is not a usable resource, the terminal 20 determines, in step S409, whether there is a candidate slot for which the determination in step S407 has not been made.

In response to determining, in step S409, that there is a candidate slot for which the determination in step S407 has not been made, the terminal 20 selects, in step S410, a slot subsequent to, in the direction of time, the candidate slot for which the determination in step S407 has been made.

Subsequently, the terminal 20 repeats the processing of S406-S410.

In response to determining, in step S409, that there is no candidate slot for which the determination at step S407 has not been made, the terminal 20 does not transmit, in step S411, the HARQ-ACK on the PUCCH resource in the candidate cell for transmitting the PUCCH.

Fig. 14 is a diagram illustrating an example of an operation of the terminal 20 in a case where the "PUCCH carrier switching" is to be executed. In the example of Fig. 14, it is assumed that the number of candidate cells for transmitting the PUCCH is greater than 1 (X > 1).

In the example of Fig. 14, the operation of the terminal 20 in steps S502 through S505 is the same as the operation of the terminal 20 in steps S201 through S204 of Fig. 8. In the example of Fig. 14, the operation of the terminal 20 in steps S506 to S508 is the same as the operation of the terminal 20 in steps S205 to S207 of Fig. 8.

The operation of the terminal 20 in the example of Fig. 14 differs from the operation of the terminal 20 in the example of Fig. 8 in that the operation of the terminal 20 in the example of Fig. 8 is performed for multiple candidate cells for transmitting the PUCCH. Specifically, in step S501 of Fig. 14, the terminal 20 sequentially arranges candidate calls for transmitting X PUCCHs in a configured set. In step S506, the terminal 20 selects the first candidate among the candidate cells for transmitting the X PUCCHs and performs the determinations of S507 and S508.

In step S508, if it is determined that the PUCCH resource is a usable resource, the terminal 20 transmits the HARQ-ACK on the PUCCH resource determined to be usable in the candidate cell for transmitting the PUCCH in step S509.

If it is not determined in step S508 that the PUCCH resource is a usable resource, in step S510, the terminal 20 determines whether there is a candidate cell for transmitting the PUCCH for which the determination at step S508 has not been made.

In response to determining, in step S510, that there is a candidate cell for transmitting the PUCCH for which the determination at step S508 has not been made, the terminal 20 selects, in step S511, a candidate cell for transmitting the PUCCH subsequent to the candidate cell for transmitting the PUCCH for which the determination at step S508 has been made.

Subsequently, the terminal 20 repeats the processing of S507-S511.

In response to determining, in step S510, that there is no candidate cell for transmitting the PUCCH for which the determination at step S508 has not been made, the terminal 20 does not transmit, in step S512, the HARQ-ACK on the PUCCH resource in the candidate cell for transmitting the PUCCH.

It should be noted that the ordering of candidate cells for transmitting the X PUCCHs in step S501 of Fig. 14 may be performed based on indexes of component carriers (CCs). For example, the ordering may be performed in the ascending order of the indexes of the CCs, or in the descending order of the indexes of the CCs. Alternatively, the ordering of the candidate cells for transmitting the X PUCCHs in step S501 of Fig. 14 may be performed based on the subcarrier spacing and the indexes of the CCs, if different types of subcarrier spacing are configured for the candidate SCells. For example, for each type of subcarrier spacing, the ordering may be performed in the ascending/descending order of the indexes of the CCs, and, subsequently, the ordering may be performed in the ascending/descending order of the types of subcarrier spacing.

As for step S507 of Fig. 14, as in the case of Fig. 12, the operation of the terminal 20 may be specified by dividing into two cases.

### (Example of the operation of the terminal for Option 2-2-1)

In the case of Option 2-2-1, for example, the timing pattern indicates, for each unit of time (e.g., a slot) included in a specific time interval, one cell of the X+1 cells can be used for a PUCCH transmission. In this case, the PUCCH transmission by the terminal 20 may be performed, for example, according to steps 1-4 below.

Step 1: The terminal 20 determines the timing for transmitting the HARQ-ACK in the PCell (which may be the PSCell or the PUCCH-SCell) based on a K1 value.

Step 2: The terminal 20 determines a candidate CC corresponding to the timing for transmitting the HARQ-ACK determined at step 1 and the timing pattern.

Step 3: The terminal 20 determines the timing for transmitting the HARQ-ACK in the candidate CC.

Step 4: The terminal 20 determines a PUCCH resource in the candidate CC and transmits the PUCCH.

In step 2 above, the terminal 20 may determine the candidate CC directly based on the timing pattern.

For step 3 described above, three cases from case 1 to case 3 below can be considered.

Case 1: The case where the subcarrier spacing of the candidate CC is the same as the subcarrier spacing of the PCell (which may be the PSCell, or the PUCCH-SCell). In this case, the operation of the terminal 20 may be the same as the operation described in Fig. 9.

Case 2: The case where the subcarrier spacing of the candidate CC is less than the subcarrier spacing of the PCell (which may be the PSCell, or the PUCCH-SCell). In this case, the operation of the terminal 20 may be the same as the operation described in Fig. 10.

Case 3: The case where the subcarrier spacing of the candidate CC is greater than the subcarrier spacing of the PCell (which may be the PSCell, or the PUCCH-SCell). In this case, the operation of the terminal 20 may be the same as the operation according to Alt 1A or Alt 1B described in Fig. 11.

### (Example of the operation of the terminal for Option 2-2-2)

In the case of Option 2-2-2, for example, the timing pattern indicates, for each unit of time (e.g., a slot) included in a specific time interval, up to N (N is an integer less than or equal to X+1) cells of the X+1 cells can be used for a PUCCH transmission. In this case, the PUCCH transmission by the terminal 20 may be performed, for example, according to steps 1-4 below.

Step 1: The terminal 20 determines the timing for transmitting the HARQ-ACK in the PCell (which may be the PSCell or the PUCCH-SCell) based on a K1 value.

Step 2: The terminal 20 determines a list of candidate cells for transmitting the PUCCH corresponding to the timing for transmitting the HARQ-ACK determined at step 1 and the timing pattern.

Step 3: The terminal 20 detects a candidate cell for transmitting the PUCCH with the determined time and frequency domain PUCCH resource that does not overlap an invalid symbol, in the list of the candidate cells for transmitting the PUCCH.

Step 4: The terminal 20 performs the PUCCH transmission on the determined PUCCH resource in the selected cell for transmitting the PUCCH.

Note that, in the above-described embodiments, when carrier switching is to be performed on a per sub-slot basis, the slot in Fig. 9 to Fig. 14 may be replaced with the sub-slot.

The PUCCH carrier switching may be applied to a PUCCH for a Scheduling Request (SR) and/or a PUCCH for Channel State Information (CSI).

A type of UCI to which the PUCCH carrier switching is to be applied may be specified in a technical specification, or may be configured by the RRC.

When the above-described embodiments are applied to the SR PUCCH and/or the CSI PUCCH, the HARQ-ACK PUCCH resource in the above-described embodiments may be replaced by an SR PUCCH resource and/or a CSI PUCCH resource.

Among the multiple options in the above-described embodiments, the option to be used may be configured by a higher layer parameter, may be transmitted by the terminal 20 to the base station 10 as UE capability, may be specified in a technical specification, or may be configured by a higher layer parameter and transmitted to the base station 10 as the UE capability.

As the terminal capability information (UE capability) of the terminal 20, information indicating whether the terminal 20 supports the PUCCH carrier switching may be specified.

As the terminal capability information (UE capability) of the terminal 20, information indicating whether the terminal 20 supports the PUCCH carrier switching based on the timing pattern may be specified.

As the terminal capability information (UE capability) of the terminal 20, information indicating whether the terminal 20 supports the PUCCH carrier switching based on a semi-static configuration may be specified.

In the embodiments of the present invention, the examples are described such that, if, in one group of the MCG, the SCG, or the PUCCH-SCell group, the slot at the timing at which the PUCCH should be transmitted in the corresponding PCell, PSCell, or PUCCH-SCell is configured as DL, the PUCCH transmission is performed in the SCell in the corresponding cell group. However, the embodiments of the present invention are not limited to these examples. For example, if the UCI received on the PUCCH by the base station 10 can be transmitted to another base station 10 via the backhaul link in real time, so that the UCI can be reflected on scheduling of an SCell under control of the other base station 10, in a case where, in one group of the MCG, the SCG, or the PUCCH-SCell group, the slot at the timing at which the PUCCH should be transmitted in the corresponding PCell, PSCell, or PUCCH-SCell is configured as DL, the PUCCH transmission may be performed in a cell outside the corresponding cell group.

In the following, as a method for implementing the "PUCCH carrier switching," an example of a method is described in which the base station 10 dynamically indicates a carrier for transmitting the PUCCH to the terminal 20.

In a case where the base station 10 dynamically indicates the PUCCH carrier switching to the terminal 20, for example, the base station 10 may use Downlink Control Information (DCI).

In a case where the base station 10 dynamically indicates the PUCCH carrier switching to the terminal 20 by using DCI, for example, when only the DCI associated with the PUCCH for transmitting the HARQ-ACK can be used, the operations of the base station 10 and the terminal 20 are unclear.

Furthermore, the operations of the base station 10 and the terminal 20 are unclear in a case where the base station 10 dynamically indicates the PUCCH carrier switching to the terminal 20 by using DCI associated with the PUCCH for transmitting the HARQ-ACK or by using DCI not associated with the PUCCH for transmitting the HARQ-ACK.

### (Proposal A1)

In a case where the base station 10 dynamically indicates the PUCCH carrier switching to terminal 20, the base station 10 may indicate the PUCCH carrier switching by using DCI. As for the DCI indicating the PUCCH carrier switching, the following options are considered.

### (Option A1)

The base station 10 may indicate the PUCCH carrier switching to the terminal 20 by using only the DCI associated with the PUCCH for transmitting the HARQ-ACK. In this case, a DCI format of the DCI associated with the PUCCH for transmitting the HARQ-ACK may be DCI format 1_0, DCI format 1_1, DCI format 1_2, DCI format 1 0 and DCI format 1_1, DCI format 1 0 and DCI format 1_2, DCI format 1 1 and DCI format 1_2, or DCI format 1_0 and DCI format 1_1 and DCI format 1_2.

### (Option A2)

The base station 10 may indicate the PUCCH carrier switching to terminal 20 by using the DCI associated with the PUCCH for transmitting the HARQ-ACK. The base station 10 may also indicate the PUCCH carrier switching to the terminal 20 by using DCI not associated with the PUCCH for transmitting the HARQ-ACK.

### (Option A2-1)

In the case of Option A2 described above, the DCI may be DCI specific to the terminal 20 (UE specific DCI).

### (Option A2-1-A)

In the case of Option A2-1 described above, the DCI may be DCI for scheduling a PDSCH. The DCI format may be DCI format 1_0, DCI format 1_1, DCI format 1_2, DCI format 1 0 and DCI format 1_1, DCI format 1 0 and DCI format 1_2, DCI format 1_1 and DCI format 1_2, or DCI format 1_0 and DCI format 1_1 and DCI format 1_2.

### (Option A2-1-B)

In the case of Option A2-1 described above, the DCI may be DCI for not scheduling a PDSCH. The DCI format may be DCI format 1_0, DCI format 1_1, DCI format 1_2, DCI format 1_0 and DCI format 1_1, DCI format 1_0 and DCI format 1_2, DCI format 1_1 and DCI format 1_2, or DCI format 1_0 and DCI format 1_1 and DCI format 1_2.

### (Option A2-1-C)

In the case of Option A2-1 described above, the DCI may be DCI for scheduling a PDSCH and aperiodic CSI reports. The DCI format may be DCI format 1_0, DCI format 1_1, DCI format 1_2, DCI format 1 0 and DCI format 1_1, DCI format 1_0 and DCI format 1_2, DCI format 1_1 and DCI format 1_2, or DCI format 1_0 and DCI format 1_1 and DCI format 1_2.

### (Option A2-1-D)

In the case of Option A2-1 described above, the DCI may be DCI for not scheduling a PDSCH and aperiodic CSI reports. The DCI format may be DCI format 1_0, DCI format 1_1, DCI format 1_2, DCI format 1 0 and DCI format 1_1, DCI format 1_0 and DCI format 1_2, DCI format 1_1 and DCI format 1_2, or DCI format 1_0 and DCI format 1_1 and DCI format 1_2.

### (Option A2-1-E)

In the case of Option A2-1 described above, the DCI format may be a new user specific DCI format.

### (Option A2-2)

In the case of Option A2 described above, the DCI may be a group common DCI that is common to a group of the terminals 20.

### (Option A2-2-A)

In the case of Option A2-2 described above, the DCI format may be an existing group common format (e.g., DCI format 2_0, DCI format 2_2, or DCI format 2_0 and DCI format 2_2). The existing group format may be provided with a specified indication (legacy indication) or a format without the specified indication.

### (Option A2-2-B)

In the case of Option A2-2 described above, the DCI format may be a newly defined DCI format that is common to a group of the terminals 20.

In the case of Option A1 described above, a type of a PUCCH that can be changed by the "PUCCH carrier switching" may only be a PUCCH for transmitting a HARQ-ACK. In the case of Option A1, the base station 10 indicates the PUCCH carrier switching to the terminal 20 by using only DCI associated with a PUCCH for transmitting a HARQ-ACK. Accordingly, it is likely that the DCI is not associated with a PUCCH for transmitting an SR, and the DCI is not associated with a PUCCH for transmitting CSI.

In the case of Option A2 described above, a type of a PUCCH that can be changed by the "PUCCH carrier switching" may be a PUCCH for transmitting a HARQ-ACK, a PUCCH for transmitting an SR, and/or a PUCCH for transmitting CSI. In this case, a type of a PUCCH that can be changed by the "PUCCH carrier switching" may be specified by a technical specification (Alt1), may be configured by RRC signaling (Alt2), may be indicated by a DCI field (Alt3), or may be specified by a DCI format (Alt4). For example, DCI 1_1 may be used to change a PUCCH for transmitting a HARQ-ACK. DCI 1-2 may be used to change a PUCCH for transmitting a HARQ-ACK, a PUCCH for transmitting an SR, and a PUCCH for transmitting CSI. The correspondence between the DCI format and the type of the PUCCH to be changed may be specified in a technical specification, or may be configured by RRC signaling.

In a case where the base station 10 dynamically indicates the PUCCH carrier switching to the terminal 20, the base station 10 may indicate the PUCCH carrier switching by using DCI. In this case, an index of a changed cell may be directly indicated by the DCI (Alt1). Furthermore, a set of candidate serving cells for a changed serving cell may be configured by RRC signaling, and an index corresponding to one serving cell in the set of the candidate serving cells for the changed serving cell may be indicated by DCI (Alt2). In a case where an index of a changed cell is indicated by DCI, a DCI field for indicating the index may be a new DCI field, or an unused DCI field. For example, if DCI is not used simultaneously for the PUCCH carrier switching and scheduling/a specified instruction, it may be indicated that the DCI is used for the scheduling/the specified instruction, or the DCI is used for the PUCCH carrier switching by using a specific value of one or more fields as a flag. An existing field may be used for indicating the PUCCH carrier switching by changing the interpretation of the existing field.

### (Proposal A2)

In a case where the base station 10 dynamically indicates the PUCCH carrier switching to the terminal 20, the base station 10 may indicate the PUCCH carrier switching by using DCI. The base station 10 may indicate the PUCCH carrier switching to the terminal 20 by using only DCI associated with a PUCCH for transmitting a HARQ-ACK.

### (Option A2-1)

In a case where the base station 10 indicates the PUCCH carrier switching to the terminal 20 by using only DCI associated with a PUCCH for transmitting a HARQ-ACK, the terminal 20 may first determine a changed cell for transmitting the PUCCH, and, subsequently, determine the timing for reporting, generate a HARQ-ACK code book, and determine a PUCCH resource of the changed cell for transmitting the PUCCH.

Specifically, in step 1, the terminal 20 determines a changed cell for transmitting the PUCCH according to a field indicating a cell for transmitting the PUCCH in the associated DCI.

In step 2, the terminal 20 determines the timing for transmitting the HARQ-ACK by counting K' slots in the changed cell for transmitting the PUCCH.

### (Option A2-1-1)

K' may be a K1 value defined by the subcarrier spacing of the changed cell for transmitting the PUCCH, and the K1 value may be indicated by the PDSCH-to-HARQ feedback timing indicator field.

Fig. 18 is a diagram illustrating an example of Option A2-1-1. In the example of Fig. 18, K1 = 2. Accordingly, the terminal 20 determines to transmit the HARQ-ACK at the slot #2n+3 based on K1 = 2 in the changed cell (Target CC) for transmitting the PUCCH.

### (Option A2-1-2)

K' may be a K1 value defined by subcarrier spacing of a primary cell, and the K1 value may be indicated by the PDSCH-to-HARQ feedback timing indicator field.

Specifically, in step 1, the terminal 20 determines K' based on the correspondence between the notified K1 value and the subcarrier spacing. The duration of the K' slots in the changed cell for transmitting the PUCCH is the same as the duration of the K1 slots in the primary cell.

In step 2, the terminal 20 determines a slot for reporting the HARQ-ACK in the changed cell for transmitting the PUCCH.

Fig. 19 is a diagram illustrating an example of Option A2-1-2. In the example of Fig. 19, K1 = 2. In the example of Fig. 19, the subcarrier spacing of the primary cell is less than the subcarrier spacing in the changed cell for transmitting the PUCCH (the duration of one slot in the primary cell is equal to the duration of four slots in the changed cell). The terminal 20 determines to transmit the HARQ-ACK at the slot #4n + 9 based on K' = 2 × 4 = 8.

Fig. 20 is a diagram for illustrating another example of Option A2-1-2. In the example of Fig. 20, K1 = 8. In the example of Fig. 20, the subcarrier spacing of the primary cell is greater than the subcarrier spacing in the changed cell for transmitting the PUCCH (the duration of four slots in the primary cell is equal to the duration of one slot in the changed cell). The terminal 20 determines to transmit the HARQ-ACK at the slot #n + 2 based on K' = 8/4 = 2.

In the case of Option A2-1-1, it is necessary to set the K1 value for all candidate cells for a changed cell for transmitting the PUCCH. Accordingly, the timing for transmitting the HARQ-ACK can be flexibly indicated compared to Option A2-1-2. In the case of Option A2-1-2, it is necessary to set the K1 value for the primary cell only. Accordingly, the degree of freedom for setting the timing for transmitting the HARQ-ACK is lower than that of Option A2-1-1.

Next, in step 3, the terminal 20 generates a HARQ-ACK codebook for the HARQ-ACK to be reported in the slot at the determined timing in the changed cell for transmitting the PUCCH.

Next, in step 4, the terminal 20 selects a PUCCH resource for the HARQ-ACK codebook in the changed cell for transmitting the PUCCH by a PRI field indicated by last DCI associated with the HARQ-ACK codebook. In addition, the terminal 20 determines a TPC value for the PUCCH for transmitting the HARQ-ACK in the changed cell for transmitting the PUCCH by the TPC command field indicated by the last DCI associated with the HARQ-ACK codebook.

In the case of Option A2-1, it is not assumed to indicate a changed cell for transmitting a PUCCH for a HARQ-ACK corresponding to a semi-persistent (SPS) PDSCH without associated DCI. Furthermore, it is not expected to indicate a changed cell for transmitting a PUCCH for a HARQ-ACK corresponding to a release of a PDSCH or SPS scheduled/indicated by a DCI format not supporting an indication of the PUCCH carrier switching. In this case, a default cell for transmitting the PUCCH may be specified.

For example, in the case of transmission of a HARQ-ACK corresponding to a semi-persistent (SPS) PDSCH, the primary cell or a cell corresponding to a configured cell index may be the default cell for transmitting the PUCCH.

If only DCI 1 1 supports an indication of the PUCCH carrier switching, for a HARQ-ACK transmission on a PDSCH scheduled by DCI 1_0 or DCI 1_2, the primary cell or a cell corresponding to a configured cell index may be a default cell for transmitting the PUCCH.

### (Option A2-2)

In a case where the base station 10 indicates the PUCCH carrier switching to the terminal 20 by using only the DCI associated with the PUCCH for transmitting the HARQ-ACK, the terminal 20 may first determine the timing for reporting and generate a HARQ-ACK codebook, and, subsequently, determine a slot for transmitting the PUCCH for the HARQ-ACK codebook in the changed cell for transmitting the PUCCH, if changing of the cell for transmitting the PUCCH is indicated by the DCI.

Steps 1 to 4 below are an example of processing in the case of Option A2-2.

In step 1, the terminal 20 determines the timing for reporting in the primary cell and generates a HARQ-ACK codebook.

In step 2, the terminal 20 determines to switch the cell for transmitting the PUCCH based on the associated DCI. In this case, the cell for transmitting the HARQ-ACK PUCCH may be switched in the following cases.

(Alt1) Alt1 is a case where at least one DCI associated with the PUCCH for transmitting the HARQ-ACK indicates changing of the cell for transmitting the PUCCH. In this case, the changed cell for transmitting the PUCCH may be a cell indicated by the last DCI associated with the HARQ-ACK PUCCH including an indication of the PUCCH carrier switching (Alt1-1), a cell corresponding to a cell index with the smallest value from among multiple candidate cells for the changed cell indicated by multiple DCIs (Alt1-2), a cell with smallest subcarrier spacing from among the multiple candidate cells for the changed cell indicated by the multiple DCIs (in a case where the smallest subcarrier spacing is configured for multiple cells, the cell corresponding to the last DCI, or the cell with the smallest cell index) (Alt1-3).

(Alt2) Alt2 is a case where the DCI format supports the PUCCH carrier switching and all the DCIs associated with the PUCCH for transmitting the HARQ-ACK indicate changing of the cell for transmitting the PUCCH, and these DCIs indicate the same changed cell. In this case, the HARQ-ACK PUCCH may be transmitted in the changed cell.

In step 3, if the changed cell for transmitting the PUCCH is not the primary cell, the terminal 20 determines a slot for transmitting the PUCCH in the changed cell for transmitting the PUCCH for the HARQ-ACK codebook.

In step 4, the terminal 20 selects a PUCCH resource for the HARQ-ACK code book in the changed cell for transmitting the PUCCH by the PRI field indicated by the last DCI associated with the HARQ-ACK codebook. In addition, the terminal 20 determines the TPC value of the PUCCH for transmitting the HARQ-ACK in the changed cell for transmitting the PUCCH through the TPC command field indicated by the last DCI associated with the HARQ-ACK codebook.

In the case of Option A2-2, the PUCCH carrier switching may be executed implicitly in accordance with the indication by another DCI associated with the same HARQ-ACK codebook, for the HARQ-ACK corresponding to the semi-persistent (SPS) PDSCH without associated DCI or for the PDSCH HARQ-ACK scheduled by a DCI format that does not support the dynamic PUCCH carrier switching.

In Option A2-1 described above, in a case where the base station 10 indicates the PUCCH carrier switching to terminal 20 by using only the DCI associated with the PUCCH for transmitting the HARQ-ACK, the terminal 20 first determines the changed cell for transmitting the PUCCH, and, subsequently, determines the timing for reporting, generates a HARQ-ACK codebook, and determines a PUCCH resource of the changed cell for transmitting the PUCCH. In this case, it is likely that HARQ-ACK transmissions in different cells overlap.

Fig. 21 is a diagram illustrating an example in which HARQ-ACK transmissions in different cells overlap in a time domain. In the example of Fig. 21, K1 = 3 for PDSCH#1, K1 = 2 for PDSCH#2, and the changed cell for transmitting the HARQ-ACK PUCCH for PDSCH#1 is different from the changed cell for transmitting the HARQ-ACK PUCCH for PDSCH#2. In the example of Fig. 21, the PUCCH for transmitting the HARQ-ACK for PDSCH #1 and the PUCCH for transmitting the HARQ-ACK for PDSCH #2 overlap in the time domain.

Fig. 22 is a diagram illustrating an example in which HARQ-ACK transmissions in different cells overlap in a time domain. In the example of Fig. 22, the slot for transmitting the HARQ-ACK in one cell overlaps the slot for transmitting the HARQ-ACK in another cell in the time domain. In the example of Fig. 22, K1 = 3 for PDSCH#1, K1 = 2 for PDSCH#2, and the changed cell for transmitting the HARQ-ACK PUCCH for PDSCH#1 is different from the changed cell for transmitting the HARQ-ACK PUCCH for PDSCH#2. In the example of Fig. 22, the slot #2n+4, which is a slot of the HARQ-ACK PUCCH for PDSCH #1, and the slot #n+2, which is a slot of the HARQ-ACK PUCCH for PDSCH #2, overlap in the time domain.

Fig. 23 is a diagram illustrating an example in which HARQ-ACK transmissions in different cells overlap in a time domain.

In the example of Fig. 23, the slot for transmitting the HARQ-ACK in one cell and the slot for transmitting the HARQ-ACK in another cell overlap the same slot in the primary cell.

In the example of Fig. 23, K1 = 3 for PDSCH #1 and K1 = 3 for PDSCH #2, the changed cell for transmitting the HARQ-ACK PUCCH for PDSCH #1 and the changed cell for transmitting the HARQ-ACK PUCCH for PDSCH #2 are different. In the example of Fig. 23, the slot #4n+4, which is a slot of the HARQ-ACK PUCCH for PDSCH #1, and the slot #2n+3, which is a slot of the HARQ-ACK PUCCH for PDSCH #2, overlap with the slot #n+1 of the primary cell.

In Option A2-2 described above, in a case where the base station 10 indicates the PUCCH carrier switching to terminal 20 by using only the DCI associated with the PUCCH for transmitting the HARQ-ACK, the terminal 20 first determines the timing for reporting and generates a HARQ-ACK codebook in the primary cell, and, subsequently, determines a slot for transmitting the PUCCH for the HARQ-ACK codebook in the changed cell for transmitting the PUCCH when changing of the cell for transmitting the PUCCH is indicated by the DCI. In this case, if the subcarrier spacing of the changed cell is allowed to be different from that of the primary cell, it is likely that HARQ-ACK transmissions in the changed cell overlap.

Fig. 24 is a diagram illustrating an example in which HARQ-ACK transmissions in the changed cell overlap. In the example of Fig. 24, in the primary cell, the slot (slot #4n+5) of the PUCCH for transmitting the HARQ-ACK for PDSCH#1 is different from the slot (slot #4n+7) of the PUCCH for transmitting the HARQ-ACK for PDSCH#2. However, as a result of changing of the cell for transmitting the PUCCH, the PUCCH for transmitting the HARQ-ACK for PDSCH #1 and the PUCCH for transmitting the HARQ-ACK for PDSCH #2 are mapped to the same slot (slot #n+1) of the changed cell.

Fig. 25 is a diagram illustrating an example in which HARQ-ACK transmissions in the changed cells overlap. In the example of Fig. 25, in the primary cell, the slot (slot #4n+5) of the PUCCH for transmitting the HARQ-ACK for PDSCH#1 is different from the slot (slot #4n+7) of the PUCCH for transmitting the HARQ-ACK for PDSCH#2. However, as a result of changing of the cell for transmitting the PUCCH, the PUCCH for transmitting the HARQ-ACK for PDSCH #1 and the PUCCH for transmitting the HARQ-ACK for PDSCH #2 are mapped to different cells. The PUCCH resource (the resource within slot #4n+5 of target CC for PUCCH #1) for transmitting the HARQ-ACK for PDSCH#1 overlaps the PUCCH resource (the resource within slot #n+1 of target CC for PUCCH #2) for transmitting the HARQ-ACK for PDSCH#2.

Fig. 26 is a diagram illustrating an example in which HARQ-ACK transmissions in the changed cells overlap. In the example of Fig. 26, in the primary cell, the slot (slot #4n+5) of the PUCCH for transmitting the HARQ-ACK for PDSCH #1 is different from the slot (slot #4n+7) of the PUCCH for transmitting the HARQ-ACK for PDSCH #2. However, as a result of changing of the cell for transmitting the PUCCH, the PUCCH for transmitting the HARQ-ACK for PDSCH #1 and the PUCCH for transmitting the HARQ-ACK for PDSCH #2 are mapped to different cells. The slot of the PUCCH for transmitting the HARQ-ACK for PDSCH#1 (slot #2n+5 of target CC for PUCCH #1) overlaps the slot of the PUCCH for transmitting the HARQ-ACK for PDSCH#2 (slot #n+1 of target CC for PUCCH #2).

The following methods of handling can be considered for the cases in which the HARQ-ACK transmissions overlap, as illustrated in Fig. 21 through Fig. 26.

### (Alternative 1)

The above-described overlapping of the HARQ-ACK transmissions is avoided by the implementation of the base station 10.

### (Alternative 2)

The terminal 20 may transmit multiple HARQ-ACK PUCCHs corresponding to the overlapped HARQ-ACK transmissions together in one HARQ-ACK codebook in the changed cell.

In this case, the changed cell may be the cell indicated by the last DCI (the last DCI received with respect to time) of the multiple DCIs associated with the multiple HARQ-ACK PUCCHs, the cell with the smallest cell index among the multiple changed cells for the multiple HARQ-ACK PUCCHs, the cell with the smallest subcarrier spacing from among the multiple changed cells for the multiple HARQ-ACK PUCCHs (if there are multiple cells with the smallest subcarrier spacing, the cell of the multiple cells indicated by the last DCI, or the cell with the smallest cell index), the cell with the start/end symbol of the HARQ-ACK PUCCH that is located in the last position in the direction of time from among the multiple HARQ-ACK PUCCHs, or the cell with the start/end symbol of the HARQ-ACK PUCCH that is located at the earliest position in the direction of time from among the multiple HARQ-ACK PUCCHs.

The terminal 20 may determine the PUCCH resource and the TPC command for the HARQ-ACK PUCCH aggregated in the changed cell by the PRI and the TPC command field indicated by the last DCI from among the DCIs associated with the multiple HARQ-ACK PUCCHs, or by the PRI and the TPC command field indicated by the last DCI of the multiple associated DCIs indicating the selected changed cell for the PUCCH carrier switching.

If it is temporally impossible to aggregate into one HARQ-ACK codebook of the changed cell, the case may be handled as an error case.

### (Proposal A3)

The base station 10 may indicate the PUCCH carrier switching to terminal 20 by using DCI associated with the PUCCH for transmitting the HARQ-ACK or DCI not associated with the PUCCH for transmitting the HARQ-ACK.

### (Option A3-1)

The DCI may indicate a PUCCH carrier pattern provided with correspondence between a slot (defined by the subcarrier spacing of the primary cell) and an index of a cell for a PUCCH transmission.

The configuration of the PUCCH carrier pattern per PUCCH cell candidate may be the same as the embodiments described above.

If the terminal 20 receives DCI indicating a PUCCH carrier for a set of slots and receives subsequent DCI indicating the multiple slots indicated by the first DCI, the terminal 20 need not expect that different PUCCH carriers are indicated for the same slot by the different DCI. The PUCCH carrier may be updated by the last DCI for these slots.

The position of the first slot indicated by the PUCCH carrier pattern may be determined by a slot index included in the PUCCH carrier pattern (which may indicate an index within a single TDD configuration periodicity or an index within a frame), determined as X1 slot from the slot in which the DCI is received (if the PUCCH carrier pattern does not include a slot index), or determined as the slot after X2 slots from the slot of the HARQ-ACK PUCCH corresponding to the DCI (if the PUCCH carrier pattern does not include a slot index). X1 and X2 may be specified by a technical specification, configured by RRC, or indicated by DCI.

The DCI may be periodic or non-periodic.

If the DCI is non-periodic and the terminal 20 does not receive DCI with a PUCCH carrier pattern for indicating the slot after the last indicated slot, the terminal 20 may use the primary cell for the PUCCH transmission in the slot that is not indicated.

If the DCI is periodic, the duration of the indicated slot may be the same as the period of DCI, shorter than the period of the DCI, or longer than the period of the DCI. If the duration of the indicated slot is shorter than the period of DCI, the PUCCH carrier pattern may be applied periodically, and the primary cell may be used for a PUCCH transmission of a slot outside the indicated range.

The operation of changing the PUCCH may be the same as those of the embodiments described above.

### (Option A3-2)

The DCI may indicate update of the PUCCH carrier for subsequent PUCCH transmissions.

Upon receiving DCI for updating the PUCCH carrier, after the activation time, the indicated carrier may be used for the PUCCH transmission, and the indicated carrier may be applied until another DCI for updating the PUCCH carrier is received.

The activation time described above may be after the X symbols from the last symbol of the DCI, may be the slot after X2 slots from the slot in which the DCI is received, may be after X3 symbols from the last symbol of the HARQ-ACK PUCCH corresponding to the DCI, or after X4 slots from the slot of the HARQ-ACK PUCCH corresponding to the DCI. X1, X2, X3, and X4 may be specified by a technical specification, configured by RRC, or indicated by DCI.

### (Option A3-3)

The PUCCH carrier indicated by the DCI may be applied to a PUCCH transmission in a window. Here, the size of the window may be specified by a technical specification, configured by RRC, or indicated by DCI.

After the end of the window, a primary cell may be applied to the PUCCH transmission.

If, after the DCI indicates a PUCCH carrier for a PUCCH transmission in the window, the terminal 20 receives another DCI indicating a PUCCH carrier in the window, the terminal 20 may update the PUCCH carrier and restart counting the window after the activation time of the latter DCI. Here, the activation time may be the same as that of Option A3-2.

The operation of changing the PUCCH may be the same as those of the embodiments described above.

The restrictions on the candidate of the cell for the PUCCH transmission and the configuration of the PUCCH resource for the candidate of the cell for the PUCCH transmission may be the same as those of the above-described embodiments.

Which option from among the options of the above-described embodiments is to be applied may be configured by a higher layer parameter, may be transmitted as terminal capability (UE capability) by the terminal 20, may be specified by a technical specification, or may be configured by the higher layer parameter and transmitted as the terminal capability.

Information indicating whether the terminal 20 supports the PUCCH carrier switching may be specified as terminal capability information (UE capacity) of the terminal 20.

Information indicating whether the terminal supports the PUCCH carrier switching based on the DCI associated with the PUCCH may be specified as terminal capability information (UE capability) of the terminal 20.

Information indicating whether the terminal supports the PUCCH carrier switching based on the DCI not associated with the PUCCH may be specified as terminal capability information (UE capability) of the terminal 20.

### (Device configuration)

Next, an example of a functional configuration of the base station 10 and the terminal 20 for performing the processes and operations described above is described. The base station 10 and the terminal 20 include the functions for executing the above-described embodiments. However, each of the base station 10 and the terminal 20 may only include the proposed function of any one of the above-described embodiments.

### <Base station 10>

Fig. 15 is a diagram illustrating an example of a functional configuration of the base station 10. As illustrated in Fig. 15, the base station 10 is provided with a transmitting unit 110; a receiving unit 120; a configuration unit 130; and a control unit 140. The functional configuration illustrated in Fig. 15 is merely an example. Functional division and names of functional units may be any division and names, provided that operation according to the embodiments of the present invention can be executed. The transmitting unit 110 and the receiving unit 120 may be referred to as a communication unit.

The transmitting unit 110 includes a function for generating a signal to be transmitted to the terminal 20 and transmitting the signal through radio. The receiving unit 120 includes a function for receiving various signals transmitted from the terminal 20 and retrieving, for example, information of a higher layer from the received signals. The transmitting unit 110 is provided with a function to transmit NR-PSS, NR-SSS, NR-PBCH, DL/UL control signals, DL data, and the like, to the terminal 20.

The configuration unit 130 stores, in a storage device, preconfigured configuration information and various types of configuration information to be transmitted to the terminal 20, and reads out the information from the storage device, if necessary. The control unit 140 performs resource assignment, control of the entire base station 10, and the like. The functional unit related to signal transmission in the control unit 140 may be included in the transmitting unit 110, and the functional unit related to signal reception in the control unit 140 may be included in the receiving unit 120. Furthermore, the transmitting unit 110 may be referred to as a transmitter, and the receiving unit 120 may be referred to as a receiver.

### <Terminal 20>

FIG. 16 is a diagram illustrating an example of a functional configuration of the terminal 20. As illustrated in FIG. 16, the terminal 20 includes a transmitting unit 210; a receiving unit 220; a configuration unit 230; and a control unit 240. The functional configuration illustrated in FIG. 16 is merely an example. The functional division and the names of the functional units may be any division and names, provided that the operation according to the embodiments of the present invention can be executed. The transmitting unit 210 and the receiving unit 220 may be referred to as a communication unit.

The transmitting unit 210 creates a transmission signal from transmission data and transmits the transmission signal through radio. The receiving unit 220 receives various signals through radio and retrieves higher layer signals from the received physical layer signals.

The configuration unit 230 stores, in a storage device, various types of configuration information received by the receiving unit 220 from the base station 10, and reads out the information from the storage device, if necessary. Furthermore, the configuration unit 230 stores preconfigured configuration information. The control unit 240 performs control or the like of the entire terminal 20. A functional unit related to signal transmission in the control unit 240 may be included in the transmitting unit 210, and a functional unit related to signal reception in the control unit 240 may be included in the receiving unit 220. Furthermore, the transmitting unit 210 may be referred to as a transmitter, and the receiving unit 220 may be referred to as a receiver.

In the embodiments, at least the following terminal, communication method, and radio communication system are described.

A terminal including a receiving unit that receives control information for changing a cell for transmitting uplink control information in a cell group; a control unit that switches, based on the control information, a specific cell for transmitting the uplink control information in the cell group to another cell; and a transmitting unit that transmits the uplink control information in the another cell.

The control information may include an index indicating the another cell, and the control unit may switch the specific cell to the another cell based on the index.

The control information may include an index indicating the another cell from among a plurality of cells preconfigured as candidate cells for a cell substituting for the specific cell, and the control unit may switch the specific cell to the another cell based on the index.

The specific cell may be a primary cell, a primary secondary cell, or a Physical Uplink Control Channel (PUCCH)-secondary cell.

A communication method executed by a terminal, the method including receiving control information for changing a cell for transmitting uplink control information in a cell group; switching, based on the control information, a specific cell for transmitting the uplink control information in the cell group to another cell; and transmitting the uplink control information in the another cell.

A radio communication system including a base station; and a terminal, wherein the base station includes a transmitting unit that transmits control information for changing a cell for transmitting uplink information in a cell group, wherein a terminal includes a receiving unit that receives the control information for changing the cell for transmitting the uplink control information in the cell group; a control unit that switches, based on the control information, a specific cell for transmitting the uplink control information in the cell group to another cell; and a transmitting unit that transmits the uplink control information in the another cell.

According to any one of the above-described configurations, an operation of a terminal for executing "PUCCH carrier switching" is clarified.

### (Hardware configuration)

The block diagrams (FIG. 15 and FIG. 16) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

For example, the base station 10, the terminal 20, or the like in an embodiment of the present disclosure may function as a computer for performing a process of the radio communication method according to the present disclosure. Fig. 17 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware, such as the processor 1001, the storage device 1002, and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a Central Processing Unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station 10 illustrated in FIG. 15 may be implemented by a control program which is stored in the storage device 1002 and operates on the processor 1001. Furthermore, for example, the control unit 240 of the terminal 20 illustrated in Fig. 16 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and may be configured with, for example, at least one of a Read Only Memory (ROM), an Erasable Programmable ROM (EPROM), an Electrically Erasable Programmable ROM (EEPROM), a Random Access Memory (RAM), and the like. The storage device 1002 may also be referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a Compact Disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described auxiliary storage device 1003 may be referred to as a secondary storage. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as, for example, a "network device," a "network controller," a "network card," a "communication module," or the like. The communication device 1004 may be configured to include a high frequency switch, a duplexer, a filter, a frequency synthesizer, and the like to implement at least one of frequency division duplex (FDD: Frequency Division Duplex) and time division duplex (TDD: Time Division Duplex). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally formed (such as a touch panel).

The devices, such as the processor 1001 and the storage device 1002, are connected by the bus 1007 for communicating information. The bus 1007 may be configured with a single bus or may be configured with different buses between the devices.

Furthermore, each of the base station 10 and the terminal 20 may be configured to include hardware, such as a microprocessor, a digital signal processor (DSP: Digital Signal Processor), an Application Specific Integrated Circuit (ASIC), a Programmable Logic Device (PLD), or a Field Programmable Gate Array (FPGA), or all or some of the functional blocks may be implemented by the hardware. For example, the processor 1001 may be implemented by at least one of these hardware components.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by using any other method. For example, the notification of information may be provided by physical layer signalling (for example, Downlink Control Information (DCI) or Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. Furthermore, the RRC signaling may be referred to as an RRC message and may be, for example, an RRC Connection Setup message, an RRC Connection Reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), new Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information, a signal, or the like described in the present disclosure may be output from a higher layer (or a lower layer) to a lower layer (or a higher layer). Information, a signal, or the like described in the present disclosure may be input and output via a plurality of network nodes.

Input and output information and the like may be stored in a specific place (for example, a memory) or may be managed by using a management table. Input and output information and the like may be overwritten, updated, or additionally written. Output information and the like may be deleted. Input information and the like may be transmitted to another device.

The determination in the present disclosure may be made in accordance with a value (0 or 1) indicated by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL: Digital Subscriber Line)) and a radio technology (such as infrared rays or a microwave), at least one of the wired technology and the radio technology is included in a definition of a transmission medium.

Information, signals, and the like described in the present disclosure may be expressed using any one of a variety of different techniques. For example, data, instructions, commands, information, signals, bits, symbols, chips, and the like which are mentioned throughout the above description may be expressed by voltages, currents, electromagnetic waves, magnetic fields or magnetic particles, optical fields or photons, or any combination thereof.

The terms described in the present disclosure and terms necessary for understanding the present disclosure may be replaced with terms having the same or similar meanings. For example, at least one of a channel and a symbol may be a signal (signalling). Furthermore, a signal may be a message. Furthermore, a component carrier (CC: Component Carrier) may be referred to as a "carrier frequency," a "cell," a "frequency carrier," or the like.

The terms "system" and "network" used in the present disclosure are used interchangeably.

Furthermore, information, parameters, and the like described in the present disclosure may be expressed by using absolute values, may be expressed by using relative values from predetermined values, or may be expressed by using any other corresponding information. For example, radio resources may be those indicated by an index.

The names used for the above-described parameters are not limited names in any point of view. Furthermore, mathematical formulas or the like using the parameters may be different from those explicitly disclosed in the present disclosure. Since various channels (for example, a PUSCH, a PUCCH, a PDCCH, and the like) and information elements can be identified by any suitable names, various names assigned to the various channels and the information elements are not limited names in any point of view.

In the present disclosure, the terms "base station (BS: Base Station)," "radio base station," "base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term, such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS: Mobile Station)," "terminal (user terminal)," "terminal (UE: User Equipment)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device that need not move during a communication operation. For example, at least one of the base station and the mobile station may be an Internet of Things (IoT) device such as a sensor.

Furthermore, the base station in the present disclosure may be replaced with a terminal. For example, each aspect/embodiment of the present disclosure may be applied to a configuration in which communication between the base station and the terminal is replaced with communication between a plurality of terminals 20 (for example, which may be referred to as Device-to-Device (D2D) or Vehicle-to-Everything (V2X)). In this case, the terminal 20 may have the functions of the base station 10 described above. Furthermore, the terms "uplink" and "downlink" may be replaced with terms (for example, "side") corresponding to inter-terminal communication. For example, an uplink channel, a downlink channel, or the like may be replaced with side channels.

Similarly, the terminal in the present disclosure may be replaced with the base station. In this case, the base station may have the functions of the above-described terminal.

The terms "determination(determining)" and "decision (determining)" used in the present specification may include various types of operations. The "determination" and "decision" may include deeming "judging," "calculating," "computing," "processing," "deriving," "investigating," "looking up, search, inquiry (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as nonlimiting and non-exhaustive examples.

A reference signal may be abbreviated as RS (Reference Signal) and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation, such as "first" or "second," used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Furthermore, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS: SubCarrier Spacing), a bandwidth, a symbol length, a cyclic prefix length, a transmission time interval (TTI: Transmission Time Interval), a number of symbols per TTI, a radio frame configuration, a specific filtering process performed in the frequency domain by a transceiver, a specific windowing process performed in the time domain by a transceiver, and the like.

The slot may include one or more symbols (Orthogonal Frequency Division Multiplexing (OFDM) symbols, Single Carrier Frequency Division Multiple Access (SC-FDMA) symbols, or the like) in the time domain. The slot may be a time unit based on the numerology.

The slot may include a plurality of mini slots. Each mini slot may include one or more symbols in the time domain. Furthermore, the mini slot may be referred to as a sub-slot. The mini slot may include fewer symbols than a slot. A PDSCH (or PUSCH) transmitted in a unit of time greater than a mini slot may be referred to as a PDSCH (or PUSCH) mapping type A. A PDSCH (or PUSCH) transmitted using a mini slot may be referred to as a PDSCH (or PUSCH) mapping type B.

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Furthermore, when a TTI is provided, a time interval (for example, the number of symbols) in which a transport block, a code block, a code word, or the like is actually mapped may be shorter than the TTI.

When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB: Physical RB), a sub carrier group (SCG: Sub-Carrier Group), a resource element group (REG: Resource Element Group), a PRB pair, an RB pair, or the like.

Furthermore, the resource block may be formed of one or more resource elements (RE: Resource Element). For example, one RE may be a radio resource region of one subcarrier and one symbol.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Furthermore, notification of predetermined information (for example, notification of "being X") is not limited to notification performed explicitly, but may be performed implicitly (for example, not notifying the predetermined information).

In the present disclosure, an SS block or a CSI-RS is an example of a synchronization signal or a reference signal.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

This international patent application is based on and claims priority to Japanese Patent Application No. 2021-014026 filed on January 29, 2021, and the entire content of Japanese Patent Application No. 2021-014026 is incorporated herein by reference.

### [Reference Signs List]

10 base station
110 transmitting unit
120 receiving unit
130 configuration unit
140 control unit
20 terminal
210 transmitting unit
220 receiving unit
230 configuration unit
240 control unit
1001 processor
1002 storage device
1003 auxiliary storage device
1004 communication device
1005 input device
1006 output device

## Claims

1. A terminal comprising:
a receiving unit that receives control information for changing a cell for transmitting uplink control information in a cell group;
a control unit that switches, based on the control information, a specific cell for transmitting the uplink control information in the cell group to another cell; and
a transmitting unit that transmits the uplink control information in the another cell.

2. The terminal according to claim 1, wherein the control information includes an index indicating the another cell, and
wherein the control unit switches the specific cell to the another cell based on the index.

3. The terminal according to claim 1, wherein the control information includes an index indicating the another cell from among a plurality of cells preconfigured as candidate cells for a cell substituting for the specific cell, and
wherein the control unit switches the specific cell to the another cell based on the index.

4. The terminal according to claim 1, wherein the specific cell is a primary cell, a primary secondary cell, or a Physical Uplink Control Channel (PUCCH)-secondary cell.

5. A communication method executed by a terminal, the method comprising:
receiving control information for changing a cell for transmitting uplink control information in a cell group;
switching, based on the control information, a specific cell for transmitting the uplink control information in the cell group to another cell; and
transmitting the uplink control information in the another cell.

6. A radio communication system comprising:
a base station; and
a terminal,
wherein the base station includes a transmitting unit that transmits control information for changing a cell for transmitting uplink information in a cell group,
wherein a terminal includes
a receiving unit that receives the control information for changing the cell for transmitting the uplink control information in the cell group;
a control unit that switches, based on the control information, a specific cell for transmitting the uplink control information in the cell group to another cell; and
a transmitting unit that transmits the uplink control information in the another cell.
